# EUROPEAN PATENT APPLICATION

(11) **EP 4 750 116 A1**
(43) Date of publication of application: **27.05.2026**
(21) Application number: 24850840.0
(22) Date of filing: 29.07.2024
(51) Int. Cl.: H04W 12/084

(54) **COMMUNICATION METHOD AND APPARATUS**

(30) Priority: 06.08.2023 CN 202310984335; 28.08.2023 CN 202311095226
(71) Applicant: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN); LIU, Wenfeng, Shenzhen, Guangdong 518129 (CN)
(74) Representative: Maiwald GmbH
(86) International application number: PCT/CN2024/108161
(87) International publication number: WO 2025/031192

(57) **Abstract**

A communication method and apparatus are provided, and relate to the field of communication technologies, thereby improving security of obtaining model-related data. In the method, an analytics function network element may request a model from a model training function network element by using a subscription message, and indicate, to a data repository network element by using an authorization message, that the model training function network element is allowed to obtain data related to the model. This enables the data repository network element to send, to the model training function network element that provides the model, the data related to the model, and prevents unauthorized model training function network elements or other network elements from obtaining the data related to the model, thereby improving security of obtaining the data related to the model.

## Description

### CROSS-REFERENCE TO RELATED APPLICATIONS

This application claims priorities to Chinese Patent Application No. 202310984335.0, filed with the China National Intellectual Property Administration on August 6, 2023 and entitled "COMMUNICATION METHOD AND APPARATUS", and to Chinese Patent Application No. 202311095226.X, filed with the China National Intellectual Property Administration on August 28, 2023 and entitled "COMMUNICATION METHOD AND APPARATUS", except all content in the application document No. 202310984335.0, which are incorporated herein by reference in their entireties.

### TECHNICAL FIELD

This application relates to the field of communication technologies, and in particular, to a communication method and apparatus.

### BACKGROUND

A network data analytics function (network data analytics function, NWDAF) network element has data collection, model training, data analysis, and model inference functions, and can be configured to collect related data from network elements, third-party service servers, terminal devices, or network management systems. In scenarios where analysis is performed based on artificial intelligence (artificial intelligence, AI) or machine learning (machine learning, ML) models, the NWDAF network element may further obtain model-related data, and retrain or reconfigure the original model based on the model-related data.

Currently, a process of obtaining the model-related data lacks a security authentication process, resulting in security risks.

### SUMMARY

This application provides a communication method and apparatus, thereby improving security of obtaining data related to a model.

According to a first aspect, a communication method is provided. The method may be implemented by an analytics function network element or a component in the analytics function network element. The analytics function network element may also be referred to as a communication apparatus, a network device, or the like. The analytics function network element is, for example, an AnLF. The component in this application may include, for example, at least one of a chip, a chip system, a processor, a transceiver, a processing unit, or a transceiver unit. For example, the method is performed by a data producer network element. The method may be implemented by using the following steps: The analytics function network element sends a subscription message to a model training function network element, where the subscription message is for requesting a model; and the analytics function network element sends an authorization message to a data repository network element, where the authorization message indicates that the model training function network element is allowed to obtain data related to the model, and the authorization message includes an identifier of the model training function network element and an index of the data.

According to the method, the analytics function network element may request the model from the model training function network element by using the subscription message, and indicate, to the data repository network element by using the authorization message, that the model training function network element is allowed to obtain the data related to the mode. This enables the data repository network element to send, to the model training function network element that provides the model, the data related to the model, and prevents unauthorized model training function network elements or other network elements from obtaining the data related to the model, thereby improving security of obtaining the data related to the model. The analytics function network element requests the model from the model training function network element, in other words, the model training function network element is a network element that provides the model for the analytics function. The model training function network element needs to train the model based on the data related to the model (for example, determine, based on the data, whether to update the model, or train the model by using the data as an input). The data is provided by the analytics function network element. The analytics function network element authorizes the model training function network element to obtain the data related to the model from the data repository network element. Therefore, the model training function network element needs to be authorized to obtain the data related to the model, thereby improving the security, and preventing the unauthorized model training function network elements or the other network elements from obtaining the data related to the model and further obtains the model based on the data. In addition, the model training function network element can have permission to obtain the data from the data repository network element to train the model, to provide the model for the analytics function network element.

In a possible implementation, the analytics function network element may send the data to the data repository network element, and receive the model from the model training function network element, where the model is determined based on the data. For example, before the subscription message is sent, the authorization message indicates that the model training function network element is allowed to obtain the data, so that the model training function network element can obtain the data from the data repository network element, and obtain the model based on the data. Subsequently, the analytics function network element may request the model from the model training function network element by using the subscription message. Therefore, the data obtained by the model training function network element through authorization from the analytics function network element may be for training the model. In addition, the analytics function network element may further request the model from the model training function network element.

In a possible implementation, the analytics function network element may receive the model from the model training function network element, determine the data based on the model, and send the data to the data repository network element. Therefore, the data obtained by the model training function network element through authorization from the analytics function network element may be obtained based on the model from the model training function network element. The analytics function network element may further store the data in the data repository network element, so that the data repository network element can provide the data for the model training function network element. Optionally, in this implementation, the data may be used by the model training function network element to determine whether to update the model.

In a possible implementation, the analytics function network element may further send an analysis identifier to a network repository function network element, and the analytics function network element receives the identifier of the model training function network element from the network repository function network element, where the identifier of the model training function network element is determined based on the analysis identifier. In implementations of this application, the analysis identifier may be for determining the model training function network element together with a vendor identifier and/or an interoperability indicator. Therefore, the model training function network element can be accurately indicated. In addition, in the implementations, the analytics function network element can efficiently obtain the vendor identifier and/or the interoperability indicator of the model training function network element by using the analysis identifier.

According to a second aspect, a communication method is provided. The method may be implemented by a data repository network element or a component in the data repository network element. The data repository network element may also be referred to as a communication apparatus, a network device, or the like. The data repository network element is, for example, an ADRF. For example, the method is performed by the data repository network element. The method may be implemented by using the following steps: The data repository network element receives an authorization message, where the authorization message indicates that a model training function network element is allowed to obtain data related to a model, and the authorization message includes an identifier of the model training function network element and an index of the data; the data repository network element receives a data request from the model training function network element, where the data request is for requesting the data; and the data repository network element sends the data to the model training function network element when the model training function network element is allowed to obtain the data related to the model.

Optionally, the model training function network element may be configured to train the model.

In a possible implementation, a list of allowed network function consumers for the data in the authorization message includes the identifier of the model training function network element; and the data repository network element sends the data to the model training function network element when the list of allowed network function consumers for the data includes the identifier of the model training function network element. The list may also be referred to as a list of allowed consumers for the data or a list of allowed data consumers for the data.

In a possible implementation, the data repository network element may store the list of allowed network function consumers for the data.

In a possible implementation, the authorization message is from an analytics function network element, and the method further includes: The data repository network element receives the data from the analytics function network element, and stores the data.

In a possible implementation of the first aspect or the second aspect, the identifier of the model training function network element includes one or more of a device identifier of the model training function network element, a vendor identifier of the model training function network element, and an interoperability indicator of the model training function network element.

According to this implementation, the interoperability indicator corresponds to the vendor identifier. Therefore, the model training function network element allowed to obtain the data may be indicated by using a device granularity or a vendor granularity.

In a possible implementation of the first aspect or the second aspect, the list of allowed network function consumers for the data in the authorization message includes the identifier of the model training function network element.

In a possible implementation of the first aspect or the second aspect, the identifier of the model training function network element includes the vendor identifier or the interoperability indicator of the model training function network element. The subscription message includes the analysis identifier, the authorization message further includes the analysis identifier, and the data request includes the analysis identifier. The analysis identifier may be for determining the model training function network element together with the vendor identifier and/or the interoperability indicator. Therefore, the model training function network element can be accurately indicated.

In a possible implementation of the first aspect or the second aspect, the data request includes an identifier of the analytics function network element and/or the index of the data. Alternatively, the data request includes the index of the data, and the index of the data may include the identifier of the analytics function network element. Therefore, the data may be identified based on the identifier of the analytics function network element and the index of the data, to avoid index repetition.

In a possible implementation of the first aspect or the second aspect, the subscription message includes the index of the data.

In a possible implementation of the first aspect or the second aspect, the authorization message further includes at least one of the identifier of the analytics function network element and an authentication indication, and the authentication indication indicates that the model training function network element that obtains the data needs to be authorized, or the authentication indication indicates that the authorization is required to obtain the data. According to this implementation, the analytics function network element may accurately indicate, by using the authorization message, data for which permission of the model training function network element needs to be verified, for example, indicate, to the data repository network element by using the authentication indication, that the authorization is required to be obtained for reading of the data.

In a possible implementation of the first aspect or the second aspect, the index of the data may be for obtaining the data related to the model.

For beneficial effects of possible implementations of the second aspect, refer to descriptions of beneficial effects of the first aspect and various implementations of the first aspect.

According to a third aspect, a communication method is provided. The method may be implemented by an analytics function network element or a component in the analytics function network element. The analytics function network element may also be referred to as a communication apparatus, a network device, or the like. The analytics function network element is, for example, an AnLF. The component in this application may include, for example, at least one of a chip, a chip system, a processor, a transceiver, a processing unit, or a transceiver unit. For example, the method is performed by the analytics function network element. The method may be implemented by using the following steps: The analytics function network element obtains an identifier of a model training function network element; and the analytics function network element sends a subscription message to the model training function network element, where the subscription message is for requesting a model, the subscription message includes a first token, the first token is for providing authorization for the model training function network element to obtain data related to the model, and the first token includes an identifier of the analytics function network element, the identifier of the model training function network element, and an index of the data.

According to the method, the analytics function network element may send the first token to the model training function network element, and request the model from the model training function network element. The first token may be for providing the authorization for obtaining the data related to the model. Therefore, the model training function network element may request, from a data repository network element based on the first token, the data related to the model. This enables the data repository network element to send, to the model training function network element that provides the model, the data related to the model, and prevents unauthorized model training function network elements or other network elements from obtaining the data related to the model, thereby improving security of obtaining the data related to the model.

In a possible implementation, the analytics function network element may send the data to the data repository network element, and receive the model from the model training function network element, where the model is determined based on the data. For example, before the subscription message is sent, an authorization message indicates that the model training function network element is allowed to obtain the data, so that the model training function network element can obtain the data from the data repository network element, and obtain the model based on the data. Subsequently, the analytics function network element may request the model from the model training function network element by using the subscription message. Therefore, the data obtained by the model training function network element through the authorization from the analytics function network element may be for training the model. In addition, the analytics function network element may further request the model from the model training function network element.

In a possible implementation, the analytics function network element may receive the model from the model training function network element, determine the data based on the model, and send the data to the data repository network element. Therefore, the data obtained by the model training function network element through the authorization from the analytics function network element may be obtained based on the model from the model training function network element. The analytics function network element may further store the data in the data repository network element, so that the data repository network element can provide the data for the model training function network element. Optionally, in this implementation, the data may be used by the model training function network element to determine whether to update the model.

In a possible implementation, the analytics function network element may further send an authorization message to the data repository network element, where the authorization message includes at least one of the identifier of the analytics function network element, the index of the data, and an authentication indication, and the authentication indication indicates that the authorization is required to obtain the data.

In a possible implementation, the analytics function network element may further receive a token update request from the model training function network element, where the token update request is for updating the first token.

According to a fourth aspect, a communication method is provided. The method may be implemented by a data repository network element or a component in the data repository network element. The data repository network element may also be referred to as a communication apparatus, a network device, or the like. The data repository network element is, for example, an ADRF. For example, the method is performed by the data repository network element. The method may be implemented by using the following steps: The data repository network element receives a data request from a model training function network element, where the data request is for requesting data, and the data request includes a first token; and the data repository network element sends the data to the model training function network element based on the first token. For technical terms, refer to descriptions in the fourth aspect.

In a possible implementation, the data request includes an index of the data; and the data repository network element sends the data to the model training function network element when it is verified that the index of the data in the data request matches an index of the data in the first token. Therefore, when the index of the data in the first token is consistent with or matches the index of the data that is requested by the model analytics function network element, the data may be sent to the model analytics function network element, to improve security of a data obtaining process.

In a possible implementation, the data request further includes an identifier of an analytics function network element; and the data repository network element sends the data to the model training function network element when the identifier of the analytics function network element in the data request is consistent with an identifier of the analytics function network element in the first token. An identifier of the analytics function network element carried in a request message of the model analytics function network element may indicate a producer of the data that is requested by the model analytics function network element. Therefore, when the identifier of the analytics function network element in the first token is consistent with or matches the identifier of the producer of the data that is requested by the model analytics function network element, the data may be sent to the model analytics function network element, to improve the security of the data obtaining process.

In a possible implementation, the data repository network element may further receive an authorization message, where the authorization message includes at least one of the identifier of the analytics function network element, the index of the data, and an authentication indication, and the authentication indication indicates that authorization is required to obtain the data.

In a possible implementation, the data repository network element may specifically send the data to the model training function network element when the first token includes the identifier of the analytics function network element and the index of the data in the authorization message.

In a possible implementation, the authorization message is from the analytics function network element, and the method further includes: The data repository network element receives the data from the analytics function network element, and stores the data.

According to a fifth aspect, a communication method is provided. The method may be implemented by a model training function network element or a component in the model training function network element. The model training function network element may also be referred to as a communication apparatus, a network device, or the like. The model training function network element is, for example, an MTLF. For example, the method is performed by the model training function network element. The method may be implemented by using the following steps: The model training function network element receives a subscription message from an analytics function network element, where the subscription message is for requesting a model, the subscription message includes a first token, the first token is for providing authorization for the model training function network element to obtain data related to the model, and the first token includes an identifier of the analytics function network element, an identifier of the model training function network element, and an index of the data; the model training function network element sends a data request to a data repository network element, where the data request is for requesting the data, and the data request includes the first token; and the model training function network element receives the data from the data repository network element.

In a possible implementation, the model training function network element may further determine the model based on the data, and send the model to the analytics function network element. For example, before the subscription message is sent, the analytics function network element indicates, by using an authorization message, the model training function network element is allowed to obtain the data, so that the model training function network element can obtain the data from the data repository network element, and obtain the model based on the data. Subsequently, the analytics function network element may request the model from the model training function network element by using the subscription message. Therefore, the data obtained by the model training function network element through the authorization from the analytics function network element may be for training the model. In addition, the analytics function network element may further request the model from the model training function network element.

In a possible implementation, the model training function network element sends the model to the analytics function network element, where the model is for determining the data. Therefore, the data obtained by the model training function network element through the authorization from the analytics function network element may be obtained based on the model from the model training function network element. The analytics function network element may further store the data in the data repository network element, so that the data repository network element can provide the data for the model training function network element. Optionally, in this implementation, the model training function network element determines, based on the data, to update the model, and sends an updated model to the analytics function network element.

In a possible implementation, the model training function network element may further send a token update request to the analytics function network element, where the token update request is for updating the first token.

In a possible implementation of the third aspect, the fourth aspect, or the fifth aspect, the first token further includes validity period information of the first token.

In a possible implementation of the third aspect, the fourth aspect, or the fifth aspect, the subscription message may further include an analysis identifier.

In a possible implementation of the fourth aspect or the fifth aspect, the data request may further include at least one of the analysis identifier, the identifier of the analytics function network element, the index of the data, and the authentication indication.

In a possible implementation of the third aspect, the fourth aspect, or the fifth aspect, the index of the data may be for obtaining the data related to the model.

For beneficial effects of possible implementations of the fourth aspect and the fifth aspect, refer to descriptions of beneficial effects of the third aspect and various implementations of the third aspect.

According to a sixth aspect, a communication method is provided. The method may be implemented by a network repository function network element or a component in the network repository function network element. The network repository function network element may also be referred to as a communication apparatus, a network device, or the like. The network repository function network element is, for example, an NRF. The component in this application may include, for example, at least one of a chip, a chip system, a processor, a transceiver, a processing unit, or a transceiver unit. For example, the method is performed by the network repository function network element. The method may be implemented by using the following steps: The network repository function network element receives a token request from a model training function network element, where the token request includes an identifier of an analytics function network element; and the network repository function network element sends a second token to the model training function network element when the model training function network element is allowed to obtain data provided by the analytics function network element, where the second token is for providing authorization for the model training function network element to obtain the data, and the second token includes the identifier of the analytics function network element and an identifier of the model training function network element. Optionally, the model training function network element may be configured to train a model, and the analytics function network element may be configured to provide data related to the model.

According to the method, the network repository function network element may receive the token request from the model training function network element, and provide the second token to the model training function network element when the model training function network element is allowed to obtain the data related to the model. The second token may be for providing the authorization for the model training function network element to obtain the data related to the model. Therefore, the model training function network element may request, from a data repository network element based on the second token, the data related to the model. This enables the data repository network element to send, to the model training function network element that provides the model, the data related to the model, and prevents unauthorized model training function network elements or other network elements from obtaining the data related to the model, thereby improving security of obtaining the data related to the model.

In a possible implementation, the network repository function network element may receive a list of allowed network function consumers for the data from the analytics function network element, where the list includes the identifier of the model training function network element, and a case in which the model training function network element is allowed to obtain the data provided by the analytics function network element is that the list includes the identifier of the model training function network element.

In a possible implementation, the network repository function network element may receive the analysis identifier from the analytics function network element, where the model is for performing the analysis service corresponding to the analysis identifier, determine, based on the analysis identifier, the model training function network element that supports the analysis service corresponding to the analysis identifier, and send the identifier of the model training function network element to the analytics function network element.

According to a seventh aspect, a communication method is provided. The method may be implemented by an analytics function network element or a component in the analytics function network element. The analytics function network element may also be referred to as a communication apparatus, a network device, or the like. The analytics function network element is, for example, an AnLF. The component in this application may include, for example, at least one of a chip, a chip system, a processor, a transceiver, a processing unit, or a transceiver unit. For example, the method is performed by the analytics function network element. The method may be implemented by using the following steps: The analytics function network element may send a list of allowed network function consumers for data to a network repository function network element, where the list includes an identifier of a model training function network element. Optionally, the model training function network element may be configured to train a model, and the analytics function network element may be configured to provide data related to the model.

In a possible implementation, after sending the list, the analytics function network element may receive the model from the model training function network element, where the model is determined based on the data. To be specific, the analytics function network element first authorizes the model training function network element to obtain the data; and then the model training function network element obtains the model based on the data, and provides the model for the analytics function network element.

In a possible implementation, the analytics function network element may send the data to a data repository network element, receive the model from the model training function network element, determine the data based on the model, and send the data to the data repository network element. To be specific, the model training function network element first obtains the model based on the data, and provides the model for the analytics function network element; and then the analytics function network element obtains, based on the model, the data related to the model. Optionally, in this implementation, the data may be used by the model training function network element to determine whether to update the model.

In a possible implementation, the analytics function network element may send an analysis identifier to the network repository function network element, where the model is for performing an analysis service corresponding to the analysis identifier; and the analytics function network element receives the identifier of the model training function network element from the network repository function network element, where the identifier of the model training function network element is determined based on the analysis identifier.

According to an eighth aspect, a communication method is provided. The method may be implemented by a model training function network element or a component in the model training function network element. The model training function network element may also be referred to as a communication apparatus, a network device, or the like. The model training function network element is, for example, an MTLF. For example, the method is performed by the model training function network element. The method may be implemented by using the following steps: The model training function network element sends a token request to a network repository function network element, where the token request includes an identifier of an analytics function network element; the model training function network element receives a second token from the network repository function network element, where the second token includes the identifier of the analytics function network element and an identifier of the model training function network element; the model training function network element sends a data request to a data repository network element, where the data request is for requesting data that is related to a model and that is provided by the analytics function network element, and the data request includes the second token; and the model training function network element receives the data from the data repository network element.

In a possible implementation, the model training function network element may further determine the model based on the data, and send the model to the analytics function network element.

In a possible implementation, the model training function network element sends the model to the analytics function network element, where the model is for determining the data. Optionally, in this implementation, the model training function network element determines, based on the data, to update the model, and sends an updated model to the analytics function network element.

In a possible implementation of the sixth aspect, the seventh aspect, or the eighth aspect, the second token further includes the analysis identifier and/or an identifier of a data storage device. The analysis identifier may be for determining the model training function network element together with a vendor identifier and/or an interoperability indicator. The identifier of the data storage device may be for ensuring that the model training function network element can obtain the data only from a data repository network element specified by the analytics function network element.

In a possible implementation of the sixth aspect, the seventh aspect, or the eighth aspect, the token request further includes the analysis identifier and/or an identifier of a data storage device.

In a possible implementation of the sixth aspect, the seventh aspect, or the eighth aspect, the identifier of the model training function network element includes one or more of the following: a device identifier of the model training function network element, a vendor identifier of the model training function network element, and an interoperability indicator of the model training function network element.

According to a ninth aspect, a communication apparatus is provided. The apparatus may implement the method according to any one of the first aspect to the eighth aspect and any possible design of the first aspect to the eighth aspect. The apparatus has functions of the foregoing analytics function network element, data repository network element, model training function network element, or network repository function network element. For example, the apparatus is an analytics function network element, a data repository network element, a model training function network element, or a network repository function network element, or is a functional module in the analytics function network element, the data repository network element, the model training function network element, or the network repository function network element.

In an optional implementation, the apparatus may include a module in one-to-one correspondence with the method/operation/step/action according to any one of the first aspect to the eighth aspect and any possible design of the first aspect to the eighth aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for the functional modules.

For example, when the apparatus is configured to perform the method according to any one of the first aspect to the eighth aspect and any possible design of the first aspect to the eighth aspect, the apparatus may include a communication unit and a processing unit.

According to a tenth aspect, an embodiment of this application further provides a communication apparatus, including a processor configured to execute a computer program (or computer-executable instructions) stored in a memory. When the computer program (or the computer-executable instructions) is executed, the apparatus is caused to perform the method according to any one of the first aspect to the eighth aspect and any possible design of the first aspect to the eighth aspect.

In a possible implementation, the processor and the memory are integrated together.

In another possible implementation, the memory is located outside the communication apparatus.

The communication apparatus further includes a communication interface. The communication interface is used by the communication apparatus for communication with another device, for example, for data and/or signal sending or receiving. For example, the communication interface may be a transceiver, a circuit, a bus, a module, or another type of communication interface.

According to an eleventh aspect, a computer-readable storage medium is provided. The computer-readable storage medium is configured to store a computer program or instructions. When the computer program or the instructions are run, the method according to any one of the first aspect to the eighth aspect and any possible design of the first aspect to the eighth aspect is caused to be implemented.

According to a twelfth aspect, a computer program product including instructions is provided. When the computer program product runs on a computer, the method according to any one of the first aspect to the eighth aspect and any possible design of the first aspect to the eighth aspect is caused to be implemented.

According to a thirteenth aspect, an embodiment of this application further provides a communication apparatus, to perform the method according to any one of the first aspect to the eighth aspect and any possible design of the first aspect to the eighth aspect.

According to a fourteenth aspect, a chip system is provided. The chip system includes a logic circuit (where it is alternatively understood as that the chip system includes a processor, and the processor may include the logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the sending function and the receiving function in the method according to any one of the first aspect to the eighth aspect and any possible design of the first aspect to the eighth aspect. The logic circuit may be further configured to transmit a message to the input/output interface, or receive, from the input/output interface, a message from another communication apparatus. The chip system may be configured to implement the method according to any one of the first aspect to the eighth aspect and any possible design of the first aspect to the eighth aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a fifteenth aspect, a communication system is provided. The communication system may include at least one of communication apparatuses configured to implement the method shown in any one of the foregoing aspects.

For example, the communication system may include an analytics function network element configured to implement the method shown in the first aspect and any possible implementation of the first aspect and a data repository network element configured to implement the method shown in the second aspect and any possible implementation of the second aspect.

For another example, the communication system may include an analytics function network element configured to implement the method shown in the third aspect and any possible implementation of the third aspect, a data repository network element configured to implement the method shown in the fourth aspect and any possible implementation of the fourth aspect, and a model training function network element configured to implement the method shown in the fifth aspect and any possible implementation of the fifth aspect.

For another example, the communication system may include a network repository function network element configured to implement the method shown in the sixth aspect and any possible implementation of the sixth aspect, an analytics function network element configured to implement the method shown in the seventh aspect and any possible implementation of the seventh aspect, and a model training function network element configured to implement the method shown in the eighth aspect and any possible implementation of the eighth aspect.

For technical effects brought by the second aspect to the ninth aspect, refer to descriptions in the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

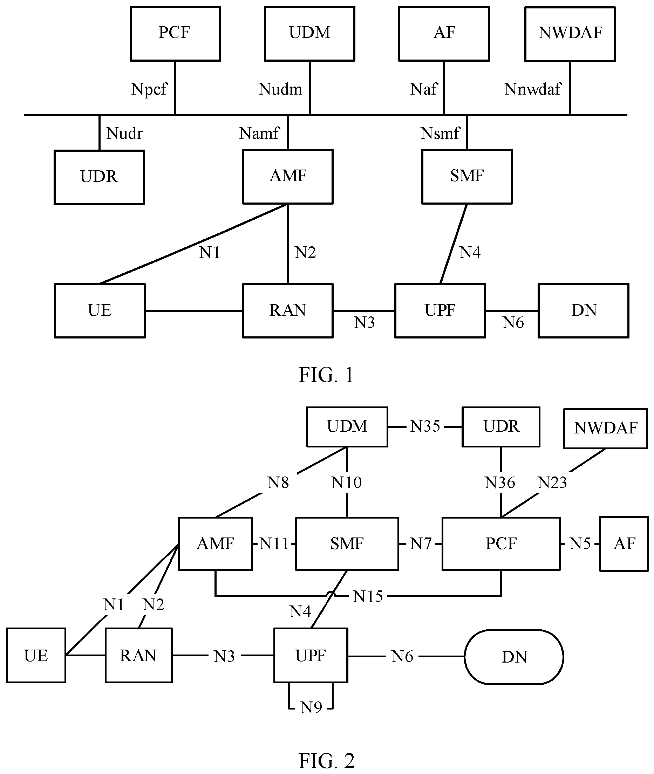

FIG. 1 is a diagram of a 5G network architecture based on a service-based architecture. The 5G network architecture shown in FIG. 1 may include a terminal device, an access network device, and a core network device. The terminal device accesses a data network (data network, DN) by using the access network device and the core network device. The core network device includes a plurality of network functions (network functions, NFs) or network elements, for example, includes a part or all of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, a network repository function (network repository function, NRF) network element (not shown in the figure), and a location management function (location management function, LMF) network element (not shown in the figure).

The access network device may be a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, or an access node in a wireless fidelity (wireless fidelity, Wi-Fi) system. Alternatively, the radio access network device may be a module or unit that completes a part of functions of a base station, for example, a central unit (central unit, CU) or a distributed unit (distributed unit, DU). The radio access network device may be a macro base station, a micro base station, or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having wireless sending and receiving functions, a wearable device, a vehicle, an urban air transportation vehicle (for example, an uncrewed aerial vehicle or a helicopter), a ship, a robot, a mechanical arm, a smart home device, or the like.

The access network device and the terminal device may be in fixed locations, or may be movable. The access network device and the terminal device may be deployed on the land, including an indoor device, an outdoor device, a handheld device, or a vehicle-mounted device; may be deployed on a water surface; or may be deployed on an airplane, a balloon, and an artificial satellite in the air. Application scenarios of the access network device and the terminal device are not limited in embodiments of this application.

The following describes the core network device in this application.

The AMF network element includes functions such as mobility management and access authentication/authorization. In addition, the AMF network element is also responsible for transferring a user policy between the terminal device and the PCF. The SMF network element includes functions such as execution of session management, execution of a control policy delivered by the PCF, UPF selection, and internet protocol (internet protocol, IP) address allocation for the terminal device. The UPF network element is used as an interface to the data network, and includes functions such as completion of user plane data forwarding, session/flow-level based charging statistics collection, and bandwidth limitation. The UDM network element includes functions such as execution of subscription data management and user access authorization. The UDR network element includes functions such as storage and retrieval of subscription data, policy data, application data, and other types of data. The NEF network element is configured to support exposure of capabilities and events. The AF network element transfers a requirement of an application side for a network side, for example, a QoS requirement or user status event subscription. The AF may be a third-party functional entity or an application server deployed by an operator. The PCF network element includes policy control functions such as session-level or service flow-level charging, QoS bandwidth guarantee, mobility management, and terminal device policy decision-making. The NRF network element may be configured to provide a network element discovery function, and provide, based on a request of another network element, network element information corresponding to a network element type. The NRF network element further provides a network element management service, for example, network element registration, update, and deregistration, and network element status subscription and push.

The NWDAF network element is mainly configured to collect data (including one or more of terminal device data, access network device data, core network element data, and third-party application device data), where the data may be data of a terminal device, an access network device, a core network element, or a third-party application device, or may be data of the terminal device on the access network device, the core network element, or the third-party application device, and then perform data analysis based on the collected data, and output a data analysis result for decision-making use by a network, a network management device, and an application. The NWDAF may perform data analysis by using a machine learning model. In the 3rd generation partnership project (3rd generation partnership project, 3GPP) release 17, a training function and an inference function of the NWDAF are split. One NWDAF may support only a model training function or a data inference function, or support both the model training function and the data inference function. The NWDAF that supports the model training function may also be referred to as a training NWDAF or an NWDAF that supports a model training logical function (model training logical function, MTLF) (MTLF for short). The training NWDAF may perform model training based on obtained data, to obtain a trained model. The NWDAF that supports the data inference function may also be referred to as an inference NWDAF or an NWDAF that supports an analytics logic function (analytics logical function, AnLF) (AnLF for short). The inference NWDAF may input input data to the trained model, to obtain an analysis result or inference data. In embodiments of this application, the training NWDAF is an NWDAF that supports at least the model training function. In a possible implementation method, the training NWDAF may also support the data inference function. The Inference NWDAF is an NWDAF that supports at least the data inference function. In a possible implementation method, the inference NWDAF may also support the model training function. If an NWDAF supports both the model training function and the data inference function, the NWDAF may be referred to as a training NWDAF, an inference NWDAF, a training inference NWDAF, or an NWDAF. In embodiments of this application, the NWDAF may be an independent network element, or may be co-located with another network element. For example, the NWDAF is disposed in the PCF network element or the AMF network element.

An analytics data repository function (analytics data repository function, ADRF) network element may be referred to as an ADRF for short. The ADRF may be configured to store data related to a model. The data may be generated by an AnLF. The ADRF may provide, for an MTLF based on a request of the MTLF, the data related to the model. The ADRF is not shown in FIG. 1 or FIG. 2.

The LMF network element is configured to manage location information of the terminal device, may calculate or verify a location of the terminal device and/or estimate a speed of the terminal device, and provide estimation precision. The LMF network element may receive a location request of the AMF network element for the terminal device through an Nlmf interface. A granularity of the location of the terminal obtained by the LMF network element through calculation may be one or more of a longitude, a latitude, a height, a cell, or a global positioning system (global positioning system, GPS).

The DN is a network located outside an operator network. The operator network may access a plurality of DNs, and a plurality of services may be deployed on the DN, so that services such as data and/or a voice can be provided for a terminal device. For example, the DN is a private network of a smart factory, a sensor installed in a workshop of the smart factory may be a terminal device, a control server of the sensor is deployed in the DN, and the control server may provide services for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

It may be understood that, the foregoing network elements are an example of an implementation. This application does not exclude that a network element or a device having functions of the foregoing network element has another name or another form in a 6G wireless communication system or an updated wireless communication system.

In FIG. 1, Nudr, Npcf, Namf, Nudm, Nsmf, Naf, and Nnwdaf are service-based interfaces respectively provided by the UDR, the PCF, the AMF, the UDM, the SMF, the AF and the NWDAF, and are for invoking corresponding service-based operations. N1, N2, N3, N4, and N6 are interface sequence numbers. Meanings of the interface sequence numbers are as follows.
(1) N1 is an interface between the AMF network element and the terminal device, and may be for transferring non-access stratum (non-access stratum, NAS) signaling (for example, including a QoS rule from the AMF network element) to the terminal device, and the like.
(2) N2 is an interface between the AMF network element and the access network device, and may be for transferring radio bearer control information from a core network side to the access network device, and the like.
(3) N3 is an interface between the access network device and the UPF network element, and is mainly for transferring uplink and downlink user plane data between the access network device and the UPF network element.
(4) N4 is an interface between the SMF network element and the UPF network element, and may be for transferring information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is for transferring uplink and downlink user data flows between the UPF network element and the DN.

In addition, in the architecture shown in FIG. 1, Nadrf may be used as a service-based interface of the ADRF.

FIG. 2 is a diagram of a 5G network architecture based on a point-to-point interface. For descriptions of functions of network elements in FIG. 2, refer to descriptions of functions of the corresponding network elements in FIG. 1. Details are not described. A main difference between FIG. 2 and FIG. 1 lies in that an interface between control plane network elements in FIG. 1 is a service-based interface, and an interface between control plane network elements in FIG. 2 is a point-to-point interface.

In the architecture shown in FIG. 2, names and functions of interfaces between network elements in a core network are as follows.
(1) N5 is an interface between the AF network element and the PCF network element, and may be for delivering an application service request and reporting a network event.
(2) N7 is an interface between the PCF network element and the SMF network element, and may be for delivering control policies at a protocol data unit (protocol data unit, PDU) session granularity and a service data flow granularity.
(3) N8 is an interface between the AMF network element and the UDM network element, and may be used by the AMF network element to obtain, from the UDM network element, subscription data and authentication data that are related to access and mobility management, and used by the AMF network element to register, with the UDM network element, information related to current terminal device mobility management, and the like.
(4) N9 is a user plane interface between UPF network elements, and is for transferring uplink and downlink user data flows between the UPF network elements.
(5) N10 is an interface between the SMF network element and the UDM network element, and may be used by the SMF network element to obtain, from the UDM network element, subscription data related to session management, and used by the SMF network element to register, with the UDM network element, information related to a current terminal device session, and the like.
(6) N11 is an interface between the SMF network element and the AMF network element, and may be for transferring PDU session tunnel information between an access network device and the UPF network element, transferring a control message sent to a terminal device, transferring radio resource control information sent to the access network device, and the like.
(7) N15 is an interface between the PCF network element and the AMF network element, and may be for delivering a terminal device policy and an access control-related policy.
(8) N23 is an interface between the PCF network element and the NWDAF network element, and the NWDAF network element may collect data on the PCF network element through the interface. It should be noted that, the NWDAF network element may further have an interface with another device (for example, the AMF network element, the UPF network element, the access network device, or the terminal device). This is not completely shown in the figure.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that, the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, may be jointly implemented by a plurality of devices, or may be implemented by a functional module in one device. This is not specifically limited in embodiments of this application.

In an implementation method, a data analytics network element in embodiments of this application may be the NWDAF network element, or may be a network element having functions of the NWDAF network element in a future communication network, for example, a 6G network. For ease of description, the following uses an example in which the data analytics network element is an NWDAF network element for description, and the NWDAF network element is referred to as an NWDAF for short.

In this application, an AnLF may be configured to perform inference, export analysis information, and expose an analytics service. Analysis may refer to deriving statistics information and/or predictions based on a request of an analytics consumer (consumer). An MTLF may be configured to train a machine learning ML model, and expose a new training service, for example, provide a trained ML model for the AnLF. In this application, for a process of obtaining data related to the model, the AnLF may be used as a data producer (producer) network element, and is denoted as an NFp; and the MTLF may be used as a data consumer network element, and is denoted as an NFc.

Currently, the AnLF may request a model from the MTLF by using a model subscription (MLModelProvision_Subscribe) service or message. The model may be obtained by the MTLF through training based on data related to the model. In addition, the AnLF may use a dataset tag (dataset tag) to specify a dataset (dataset), and the dataset may include data related to a model. Therefore, the dataset tag may identify a dataset, that is, marking the data related to the model. The dataset tag may also be understood as an index of the dataset or an index of the data. The MTLF may be used as a model-related data consumer network element, to obtain data stored by the data producer network element in a data repository. The data producer network element may be an AnLF, and the data repository network element may be a network element, for example, an analytics data repository function (analytics data repository function, ADRF), configured to store the data.

Specifically, the data related to the model may include any data of model input data, model output data (for example, a prediction result or prediction data), model ground truth data, and deviation data during prediction from the ADRF. The model input data may be for training to obtain the model. The model output data is, for example, a prediction result obtained based on the input data, or is a model prediction result corresponding to the input data. The model ground truth data may indicate a ground truth of output data that corresponds to the model input data, and may also be referred to as a true result of the input data. The deviation data during the prediction may identify a deviation between the prediction data and the ground truth data. The model output data and the model ground truth data may be for monitoring accuracy of the model and retraining and/or re-provisioning of the model. In other words, the model may be obtained based on model training data. When the model is obtained through first training, the model may be obtained through training based on the model input data and the model ground truth data. In addition, the model may alternatively be obtained by retraining a historical model based on the data related to the model. The historical model is an existing model. The prediction data may be an output result of the model.

Currently, a process of obtaining the data related to the model is the same as a process of obtaining non-model-related data. Therefore, the data related to the model is not additionally protected. The data related to the model can be obtained from the ADRF, provided that the MTLF provides the dataset tag. Therefore, if the data is obtained by an attacker through malicious traversal, the attacker may use the data to retrain a model with similar functions, completing a theft attack on the model. Therefore, there is a security risk.

This application provides a communication method. An analytics function network element authorizes a model training function network element that provides a model to obtain data related to the model. Therefore, before providing the data related to the model, a data repository network element may verify whether the model training function network element has permission to obtain the data related to the model, to avoid model leakage caused by a case that a model training function network element that does not obtain the permission obtains the data related to the model. Therefore, security of the data related to the model can be improved. The data repository network element may include an ADRF or another network element or device that is configured to store the data related to the model. In other words, the model training function network element may be configured to provide the model for the analytics function network element, and obtain, based on authorization from the analytics function network element, the data related to the model. The model training function network element includes, for example, an MTLF or another NWDAF. The analytics function network element may obtain the model from the model training function network element, and authorize the model training function network element to obtain the data related to the model. The analytics function network element includes, for example, an AnLF or another NWDAF.

In the following descriptions, an example in which the data repository network element is the ADRF, the model training function network element is the MTLF, and the analytics function network element is the AnLF is used for description.

It may be understood that, in embodiments of this application, the AnLF may be configured to generate data related to a model, and store, in the ADRF, the data related to the model, and the MTLF may obtain, from the ADRF, the data related to the model. It can be learned that, for the data related to the model, the data is generated by the AnLF. Therefore, the AnLF may be used as a data producer network element. In addition, the data related to the model may be used by the MTLF to train or update the model. Therefore, the MTLF may be used as a data consumer network element. Updating the model may include retraining the model, or may include re-obtaining a model based on new input data.

It may be understood that, a part or all of the data related to the model may be directly generated by the AnLF. For example, model output data is generated by the AnLF when the AnLF uses the model. The part or all of the data related to the model may alternatively be obtained by the AnLF from another network element or device. For example, a part or all of model input data is collected by the AnLF from another network element, and the another network element includes, for example, an AMF or a UPF. In embodiments of this application, the AnLF stores, in the ADRF, the data related to the model. In this case, it may be considered that the AnLF is a data producer of the data related to the model.

In an example of an implementation, the model may be obtained by the MTLF through training based on the data related to the model. For example, the AnLF generates the data related to the model or collects, from the another network element, the data related to the model, and sends the data to the ADRF. Correspondingly, the ADRF stores the data. The AnLF may further authorize the MTLF to obtain the data from the ADRF. After obtaining the data, the MTLF may perform model training to obtain the model, and send the model to the AnLF. Therefore, in this case, the data related to the model may include the model input data or model ground truth data. In this case, the AnLF may first authorize the MTLF to obtain the data related to the model, and then send a subscription message to the MTLF, to request the MTLF to provide, for the AnLF, the model obtained through training based on the data.

In an example of another implementation, the AnLF may first send a subscription message to the MTLF, so that the MTLF provides the model for the AnLF, and then the AnLF obtains, based on the model, the data related to the model, and stores the data in the ADRF. The AnLF may further authorize the MTLF to obtain the data related to the model, so that the MTLF obtains, from the ADRF based on the authorization, the data related to the model, and determines, based on the data related to the model, whether to update the model. If the model needs to be updated, the model may be updated based on the data related to the model, to obtain an updated model. In this case, the data related to the model includes, for example, the model output data and/or the model ground truth data of the model, and the model output data and/or the model ground truth data may be used by the MTLF to determine whether to update the model that is previously provided for the AnLF.

The foregoing two examples may also be implemented in combination. For example, the AnLF first sends the data to the ADRF, and authorizes the MTLF to obtain the data from the ADRF. The MTLF may further perform training based on the data, and provide the model obtained through training for the AnLF. Further, the AnLF may generate new data based on the model, and send the generated data to the ADRF. The MTLF may further obtain the new data from the ADRF based on the authorization of the AnLF, and determine, based on the new data, whether to update the model that is previously provided for the AnLF. If the model needs to be updated, the MTLF may retrain the model based on the new data, and may send an updated model to the AnLF.

With reference to a flowchart, the following describes a communication method provided in this application.

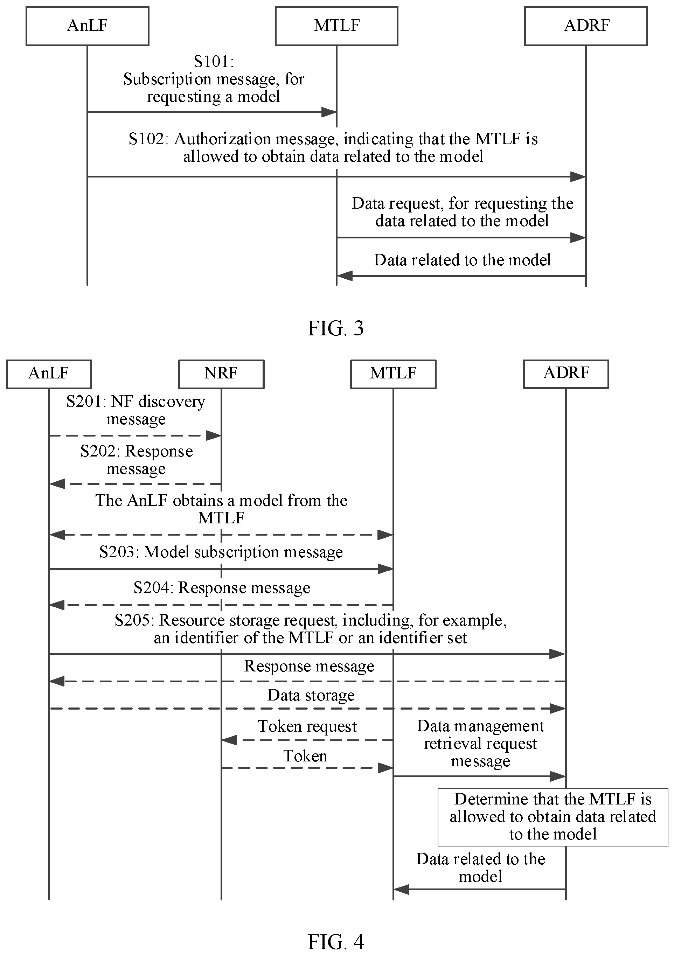

In an embodiment, an AnLF may send an authorization message to an ADRF, where the authorization message may indicate that an MTLF is allowed to obtain data related to a model. As shown in FIG. 3, an implementation of this embodiment may include the following steps.

S101: The AnLF sends a subscription message to the MTLF, where the subscription message may be for requesting the model.

It should be understood that, in this application, the subscription message may also be referred to as a model request message or the like.

As described in this application, the AnLF may request the model from the MTLF, and authorize the MTLF to obtain the data related to the model.

The AnLF may obtain identifiers of one or more MTLFs associated with an analysis identifier (analysis ID), and the MTLF in S101 may be one of the one or more MTLFs associated with the analysis identifier.

The analysis identifier may indicate an analysis service (also referred to as an analysis business), and the analysis service is related to the model, in other words, the model may be for performing the analysis service. That the MTLF is associated with the analysis identifier may be understood as that the model provided by the MTLF can be for performing the analysis service corresponding to the analysis identifier.

Optionally, whether the MTLF supports the analysis service corresponding to the analysis identifier may be determined by an NRF. For example, an association relationship between the MTLF and an identifier of the analysis service supported by the MTLF is configured in the NRF. Therefore, in an optional implementation, the AnLF may send the analysis identifier to the NRF, and the NRF provides, for the AnLF, the identifier of the MTLF corresponding to the analysis identifier.

In embodiments of this application, the identifier of the MTLF may include at least one of a device identifier of the MTLF, that is, an MTLF NF identifier (MTLF NF ID), a vendor identifier (vendor ID) of a vendor (vendor) to which the MTLF belongs, and an interoperability indicator (interoperability indicator). In this application, the device identifier may also be referred to as an instance identifier (NF Instance ID).

In this application, the MTLF NF ID may correspond to one MTLF. One MTLF or MTLF NF ID may correspond to one or more analysis identifiers. For example, an MTLF NF ID 1 corresponds to an analysis identifier 1 and an analysis identifier 2. To be specific, an MTLF to which the MTLF NF ID 1 belongs corresponds to the analysis identifier 1 and the analysis identifier 2. In addition, an MTLF NF ID 2 may correspond to the analysis identifier 1 and/or the analysis identifier 2. In this application, that the MTLF NF ID corresponds to the analysis identifier may mean that the MTLF may provide the analysis service corresponding to the analysis identifier.

The vendor identifier may identify a device vendor. One vendor identifier may correspond to one or more MTLF device identifiers. For example, both the MTLF NF ID 1 and the MTLF NF ID 2 may correspond to a vendor identifier 1. To be specific, the MTLF to which the MTLF NF ID 1 belongs and an MTLF to which the MTLF NF ID 2 belongs belong to a same vendor, and a vendor identifier of the vendor is the vendor identifier 1. Optionally, the analysis identifier may be associated with the vendor identifier. That the analysis identifier is associated with the vendor identifier may mean that the analysis identifier is associated with a part or all of MTLFs of the vendor, in other words, the part or all of the MTLFs of the vendor may provide the analysis service corresponding to the analysis identifier.

The interoperability indicator is a list of MTLF providers. For example, the interoperability indicator indicates the vendor identifier, or the interoperability indicator is associated with the vendor identifier. The interoperability indicator may be associated with the analysis identifier. For example, the interoperability indicator and the analysis identifier are in one-to-one correspondence. It indicates that the MTLF allows a corresponding vendor or an MTLF included in the vendor to obtain a model corresponding to the analysis identifier, and/or indicates that the MTLF is allowed to interoperate with the AnLF to obtain the model corresponding to the analysis identifier. Optionally, one MTLF may have one or more interoperability indicators. If one MTLF has a plurality of interoperability indicators, the plurality of interoperability indicators respectively correspond to different analysis identifiers. For example, the MTLF NF ID 1 corresponds to the analysis identifier 1 and the analysis identifier 2, and the MTLF to which the MTLF NF ID 1 belongs has an interoperability indicator 1 and an interoperability indicator 2. The interoperability indicator 1 corresponds to the analysis identifier 1, and the interoperability indicator 2 corresponds to the analysis identifier 2. Optionally, if the MTLF to which the MTLF NF ID 1 belongs and the MTLF to which the MTLF NF ID 2 belongs support interoperability, the MTLF to which the MTLF NF ID 2 belongs may have the interoperability indicator 1 and the interoperability indicator 2. The interoperability indicator 1 corresponds to the analysis identifier 1, and/or the interoperability indicator 2 corresponds to the analysis identifier 2. That is, MTLFs of a same vendor may have a same interoperability indicator for a same analysis identifier. In addition, if the MTLF to which the MTLF NF ID 1 belongs and the MTLF to which the MTLF NF ID 2 belongs belong to different vendors, the MTLF to which the MTLF NF ID 2 belongs may have an interoperability indicator 3 and an interoperability indicator 4. The interoperability indicator 3 corresponds to the analysis identifier 1, and/or the interoperability indicator 4 corresponds to the analysis identifier 2. That is, MTLFs of a same vendor may have different interoperability indicators for a same analysis identifier.

In another implementation, an MTLF 1 identified by the MTLF NF ID 1 belongs to a vendor 1, and an MTLF 2 identified by the MTLF NF ID 2 belongs to a vendor 2. Optionally, if both the MTLF 1 and the MTLF 2 support interoperability for a specific analysis identifier (for example, the analysis identifier 1), the MTLF 1 may have an interoperability indicator (the vendor 1 or the vendor 2), and the MTLF 2 may have an interoperability indicator (the vendor 1 or the vendor 2).

In an optional implementation of obtaining the identifier of the MTLF associated with the analysis identifier, an association relationship between the analysis identifier and the MTLF may be configured in the NRF. In this implementation, the AnLF may obtain, from the NRF, the identifier of the MTLF associated with the analysis identifier. Optionally, the AnLF may send, to the NRF, an analysis identifier of an analysis service that needs to be performed. The NRF may learn of, based on a pre-configuration, specific MTLFs or vendors that allow the AnLF to obtain a model associated with the analysis identifier provided by the AnLF, that is, learn of specific MTLFs or vendors that support training of a model for performing the analysis service, and provide identifiers of the MTLFs for the AnLF. The configuration may be provided by a management network element.

For example, as shown in FIG. 4, the AnLF may provide an analysis identifier for the NRF, and the AnLF obtains, from the NRF, device identifiers of one or more MTLFs associated with the analysis identifier. Specifically, as shown in S201 and S202 shown in FIG. 4, the AnLF may send an NF discovery (Nnrf_NFDiscovery) message to the NRF, where the message carries the analysis identifier, and the NRF provides, for the AnLF by using a response message, the identifiers of the one or more MTLFs associated with the analysis identifier. As described above, the identifier of the MTLF may include at least one of the device identifier, the vendor identifier, and the interoperability indicator. Optionally, the response message may further carry the analysis identifier, to indicate an association relationship between an analysis service and the MTLF.

In an example of S101, the subscription message may include an index of the data, to indicate an association relationship between the data and the model. For example, before S101, the index of the data has been generated by the AnLF, the MTLF, or another network element. When the model is requested by using the subscription message, the index of the data is also carried to request the data. In addition, the AnLF may alternatively send the index of the data to the MTLF by using another message. For example, before or after the subscription message, the AnLF sends a message carrying the index of the data to request the data. Optionally, the message carrying the index of the data may further carry a model identifier and/or the analysis identifier, to indicate the association relationship between the model and the data. The model identifier may be provided when the MTLF provides the model for the AnLF. For example, the AnLF sends the subscription message to the MTLF. Subsequently, the MTLF sends the model and the model identifier to the AnLF. Then, the AnLF sends the index of the data and the model identifier to the MTLF, to indicate the association relationship between the model and the data.

In this application, the index of the data may indicate or be for obtaining the data related to the model. For example, the index of the data may be a combination of an identifier of the AnLF and a dataset tag. For another example, the index of the data may be a dataset tag. In this case, the dataset tag may include an identifier of the AnLF or a part of information of the identifier of the AnLF. For example, the dataset tag includes the identifier of the AnLF or other information that can uniquely identify an NFp. The dataset tag may be for marking a dataset, and the dataset includes the data related to the model.

In this application, the identifier of the AnLF may be a device identifier of the AnLF, that is, an AnLF NF ID.

For example, as shown in S203 in FIG. 4, the AnLF may send a model subscription message (MLModelProvision_Subscribe) to the MTLF. The message is a subscription message, and S203 corresponds to S101. The model subscription message may be used to obtain the model from the MTLF.

In addition, the model subscription message may further include the analysis identifier. Correspondingly, the MTLF may include, in the response message shown in S204 based on the analysis identifier, the model for performing the corresponding analysis service and the model identifier.

Optionally, the model subscription message may include the index of the data, to establish an association between the requested model and the dataset or the data. Alternatively, the AnLF may include the analysis identifier by using another message, to obtain the model from the MTLF. For example, the AnLF may request the model from the MTLF by using the subscription message, and then provide an association relationship between the model and the index of the data for the MTLF by using the model subscription message or a model subscription update message, so that the MTLF learns of the index of the data related to the model, and requests the data based on the index.

Optionally, the AnLF may indicate the index of the data to the ADRF, so that the ADRF stores, in the index, the data related to the model. For example, as shown in FIG. 4, the AnLF may send a resource storage request (Nadrf data management storage request) shown in S205 to the ADRF, to request the ADRF to store the data. The request may include the index of the data. For example, if the index of the data includes a combination of the identifier of the AnLF and an index of the dataset, correspondingly, when storing the model, the ADRF may use the combination of the identifier of the AnLF and the index of the dataset as the index of the data. Optionally, the ADRF may send a storage transaction identifier (storage transaction identifier) to the AnLF by using a response message, where the identifier may be a storage identifier generated by the ADRF for the index of the data. As shown in FIG. 4, in a data storage process, the ADRF may store, in the index, the data related to the model from the AnLF, and mark the data.

S102: The AnLF sends the authorization message to the ADRF, where the authorization message indicates that the MTLF is allowed to obtain the data related to the model, and the authorization message includes the identifier of the MTLF and the index of the data. Correspondingly, the ADRF stores the identifier of the MTLF and the index of the data.

In this application, the authorization message may also be referred to as a data storage request message, a resource storage request message, or the like.

The MTLF in S102 includes the MTLF in S101.

In an example, the authorization message shown in S102 may carry the identifier of the MTLF that is allowed to obtain the data related to the model. Therefore, the ADRF may learn of, based on the identifier of the MTLF, specific MTLFs that are allowed to obtain the data related to the model.

In addition, the index of the data may indicate or be for determining the data that the MTLF is allowed to obtain or a dataset to which the data belongs, that is, the index of the data is an index of the data that the MTLF is allowed to obtain.

As described in this application, the identifier of the MTLF may include at least one of the device identifier, the vendor identifier, or the interoperability indicator of the MTLF.

If the identifier of the MTLF is the device identifier of the MTLF, an MTLF indicated by the device identifier is allowed to obtain the data having the index.

Optionally, the authorization message may further include the analysis identifier, and the analysis identifier may be associated with the vendor identifier and/or the interoperability indicator. If the identifier of the MTLF is the vendor identifier, a part or all of MTLFs that have the vendor identifier and that correspond to the analysis identifier of the model are allowed to obtain the data having the index. Therefore, an MTLF that has the vendor identifier and that supports the analysis service of the analysis identifier can be determined by a combination of the analysis identifier and the vendor identifier. If the identifier of the MTLF is the interoperability indicator, all of MTLFs that have the interoperability indicator and that correspond to the analysis identifier of the model are allowed to obtain the data having the index. Therefore, an MTLF that has the interoperability indicator and that supports the analysis service of the analysis identifier may be determined by a combination of the analysis identifier and the interoperability indicator.

It may be understood that, the AnLF does not necessarily need to provide the analysis identifier for the ADRF, but only needs to make the ADRF learn of the index of the data that the MTLF is allowed to obtain.

In addition, the authorization message may further include the identifier of the AnLF, to indicate a data source.

In a possible embodiment, the authorization message shown in S102 may carry an identifier set, and the identifier set may include identifiers of one or more MTLFs that are allowed to obtain the data related to the model, to indicate the MTLFs that are allowed to obtain the data related to the model. Correspondingly, the identifier set may include identifiers of one or more MTLFs. If the identifier set includes identifiers of a plurality of MTLFs, the plurality of MTLFs may correspond to a same model or different models. In this application, the identifier set may also be referred to as an identifier list, and may be specifically referred to as a list of allowed network function consumers for the data, a list of allowed consumers for the data, a list of allowed data consumers for the data, or the like.

Optionally, if the identifier set is carried, the identifier set may further include the index of the data. For example, the identifier set includes a plurality of rows of information, and a correspondence between an identifier of one MTLF and an index of one piece of data may be included in one row of information in the identifier set.

As shown in Table 1, the identifier set may include the identifiers of the one or more MTLFs, so that the one or more MTLFs can obtain data of one or more models from the ADRF.

**Table 1**

| Identifier of the AnLF | Index of the data | Optional analysis identifier | Identifier of the MTLF | | |
|---|---|---|---|---|---|
| | | | MTLF NF ID | Vendor identifier | Interoperability indicator |
| AnLF NF ID 1 | Index 1 | - | MTLF NF ID 1 or MTLF NF ID 2 | - | - |
| AnLF NF ID 1 | Index 2 | Analysis identifier 1 | - | Vendor identifier 1 | - |
| AnLF NF ID 1 | Index 3 | Analysis identifier 2 | - | - | Interoperability indicator 1 |
| AnLF NF ID 1 | Index 4 | | MTLF NF ID 3 | - | - |
| AnLF NF ID 1 | Index 5 | Analysis identifier 3 | MTLF NF ID 4 | Vendor identifier 2 | Interoperability indicator 2 |
| ... | ... | ... | ... | ... | ... |

It may be understood that, in Table 1, there is an "and" relationship between a plurality of items: MTLF NF ID, vendor identifier, and interoperability indicator that correspond to a same index of data. For example, the index 5 of the data corresponds to the MTLF NF ID 4, the vendor identifier 2, and the interoperability indicator 2. It indicates that the data corresponding to the index 5 is allowed to be obtained by all of MTLFs whose identifiers are the MTLF NF ID 4 and that have the vendor identifier 2 and that correspond to the analysis identifier 3, or that have the interoperability indicator 2 and that correspond to the analysis identifier 3. A vendor identifier of the MTLF corresponding to the MTLF NF ID 4 is not the analysis identifier 3, and/or an interoperability indicator of the MTLF corresponding to the MTLF NF ID 4 is not the interoperability indicator 2.

It may be further understood that, Table 1 is merely an example implementation of the identifier set. In an actual application, there may be only a part of information shown in Table 1. For example, the AnLF NF ID and/or the analysis identifier may alternatively not be included in the identifier set. In addition, appropriate extension or modification may be made according to Table 1.

Table 1 is used as an example. If there is an identifier of an MTLF that requests data in the identifier set, it indicates that the AnLF allows the MTLF to obtain the corresponding data, and in response to a data request of the MTLF, the ADRF may provide, for the MTLF, the data having a corresponding index. In addition, the data request may carry the index of the data. When the index of the data carried in the data request is consistent with an index of the data that the MTLF is allowed to obtain, in response to the data request of the MTLF, the ADRF may provide, for the MTLF, the data having the corresponding index.

In this application, the data request may also be referred to as a data subscription message, a data message, or a data obtaining message.

In a possible embodiment, the authorization message in S102 may be the resource storage request shown in S205 in FIG. 4. To be specific, the AnLF may include, in the resource storage request, the identifier of the MTLF or the identifier set including the identifier of the MTLF. Alternative, the authorization message may be a message other than the resource storage request. This is not specifically limited in this application.

Optionally, the authorization message may further include an authentication indication, indicating that the MTLF obtaining the data needs authorization from the AnLF. A reason is that the authorization from the AnLF does not need to be verified for all types of data requested by the MTLF. Therefore, the AnLF needs to indicate the index of the data related to the model, so that the ADRF learns of specific data related to the model, or the ADRF learns of specific data for which permission of the MTLF needs to be verified. Correspondingly, the ADRF needs to provide the data for the MTLF based on authentication information, to be specific, the ADRF provides, for the MTLF that is authorized by the AnLF, the data related to the model. Optionally, the authentication information may indicate that the data is related to the model, and the ADRF may be configured to verify, before sending the data related to the model, the permission of the MTLF that requests the data. The method shown in FIG. 3 is used as an example. A process of verifying the permission of the MTLF may include: determining whether the identifier of the MTLF is included in authorization information, where the authorization information may be the identifier of the MTLF or the identifier set that is provided by the AnLF by using the authorization message.

In addition, the authorization information may also be understood as indicating the MTLF to authorize the AnLF to store, in the ADRF, the data related to the model. Optionally, the data has an index specified by the MTLF or an index of a dataset specified by the MTLF. For example, the MTLF may provide a specified index for the ADRF. For example, the MTLF generates the index. In addition, the MTLF may indicate, to the ADRF, an identifier of an AnLF that is allowed to store the data in the index. Optionally, when providing the model for the AnLF, the MTLF may send the index of the data, to indicate the association relationship between the model and the index of the data. Correspondingly, before storing data that is from an AnLF and that has the specified index, the ADRF may verify whether the AnLF obtains authorization from the MTLF, that is, whether an identifier of the AnLF is included in a range of identifiers of AnLFs provided by the MTLF.

In addition, the authentication indication may alternatively be sent independently of the authorization message. Alternatively, when the index of the data is a special value, the ADRF may consider by default that the data has the authentication indication, that is, consider by default that an MTLF that requests the data needs to obtain the authorization from the AnLF. Therefore, an action of sending the authentication indication by the AnLF to the ADRF may be omitted. In addition, it may also be considered that when the correspondence between the identifier of the MTLF and the index of the data exists in the identifier list or the identifier set shown in Table 1, the authorization needs to be obtained when the MTLF requests the data of the corresponding index. Therefore, the authentication indication may not exist.

Optionally, in this application, the ADRF may consider by default that the authorization from the AnLF needs to be obtained for any piece of data requested by the MTLF or any piece of data related to the model. In this case, the AnLF does not need to send the authentication indication.

Based on the procedure shown in FIG. 3, the MTLF may obtain the data from the ADRF based on the subscription message in S102. Optionally, as shown in FIG. 3, the MTLF may send a data request to the ADRF, where the data request is for requesting the data related to the model. The data request may carry the index of the data and the identifier of the MTLF. The index of the data may include a combination of the identifier of the AnLF and the dataset tag. Alternatively, the index of the data may include the dataset tag, and the dataset tag may include the identifier of the AnLF. As shown in FIG. 4, the data request may be a data management retrieval request (Nadrf_DataManagement_RetrievalRequest) message, and is also referred to as a resource retrieval request message, where the message may carry the index of the data (or the storage transaction identifier). Correspondingly, when the MTLF is allowed to obtain the data related to the model, if the identifier set includes the identifier of the MTLF, the ADRF may provide the data for the MTLF based on the data request, that is, send, to the MTLF, the data related to the model.

Optionally, the ADRF may further determine, based on the identifier of the AnLF and/or the index of the data, whether the data has the authentication indication, that is, the ADRF may identify whether the MTLF that obtains the data needs to be authorized by the AnLF.

In addition, the ADRF may further query the identifier of the MTLF or the identifier set based on the index of the data, to determine whether the MTLF is allowed by the AnLF to obtain the data. For example, if an MTLF having the MTLF NF ID 1 requests to obtain data identified by the index 1, the MTLF having the MTLF NF ID 1 is allowed to obtain the data according to Table 1. Therefore, in S104, the ADRF may send the data to the MTLF.

Optionally, if the identifier of the MTLF is a vendor identifier or an interoperability indicator, the MTLF may obtain, in a process of requesting a token from the NRF, a token including the vendor identifier or the interoperability indicator. For example, as shown in FIG. 4, the MTLF may send a token message to the NRF, and provide the vendor identifier or the interoperability indicator in the message. Correspondingly, the NRF may send the token to the MTLF after performing identity verification on the MTLF. The token may include the vendor identifier or the interoperability indicator. The MTLF may include the token in the data request. Correspondingly, the ADRF may obtain, through parsing, the vendor identifier or the interoperability indicator included in the token. Further, if the vendor identifier or the interoperability indicator of the MTLF is carried in the authorization message in S103, the ADRF may provide the data for the MTLF. Optionally, a token request may carry the analysis identifier. Correspondingly, the token may also carry the analysis identifier, to indicate the analysis service that corresponds to the analysis identifier and that is supported by the MTLF.

It may be understood that, before sending the data request, the MTLF may obtain an authentication token from the NRF. The authentication token is, for example, an access token (access_token_nwdaf). The MTLF that obtains the token may be used as an NFc to obtain a service provided by the NFp. It may be understood that, the token herein is not for verifying whether the MTLF is allowed to obtain the data provided by the AnLF, but is merely for verifying whether the MTLF is allowed to obtain the service as the NFc, for example, obtain permission of a data management retrieval (Nadrf_DataManagement_Retrieval) service. For example, as shown in FIG. 4, the MTLF may send the token request to the NRF, and the NRF sends the token to the MTLF. Correspondingly, the data management retrieval request message shown in FIG. 4 may include the token.

For example, a process in which the NFc obtains the token is used as an example for description. In a service-based system architecture, when the NFc requests a service from the NFp, the NFp needs to perform authorization check on the service requested by the NFc, that is, check whether the NFc is authorized to use the requested service. The NFp provides the corresponding service for the NFc only after the authorization check succeeds. For example, the service may be a service in which the ADRF provides data for the MTLF. In the service, the ADRF may be used as the NFp, and the MTLF may be used as the NFc. For authorization verification performed by the NFp on the service requested by the NFc, an authorization verification solution based on an access token may be used. That the NRF performs authorization check on the NFc before sending the token may include: The NRF performs verification on an identity of the NFc, and when identity verification succeeds, verifies whether the NFc has permission to access the requested service. A token #1 is generated when the NFc has the permission, so that a service obtained by the NFc by using the token #1 is an authorized service, and unauthorized use of the service is avoided.

In addition, that the NRF performs verification on the identity of the NFc may include: The NRF verifies whether a parameter (for example, an NF type (type) of the NFc) carried in a token #1 retrieval request matches a public key certificate or NF configuration information of the NFc. If the parameter matches the public key certificate or NF configuration information of the NFc, the identity verification succeeds. If the parameter does not match the public key certificate or NF configuration information of the NFc, the verification fails. Specifically, for example, the NRF may obtain the corresponding public key certificate from the NFc. The public key certificate includes information about the NFc. The NRF compares the parameter (for example, the NF type of the NFc) in the token #1 retrieval request with the information included in the public key certificate. If the parameter is consistent with the information, the identity verification succeeds. If the parameter is inconsistent with the information, the identity verification fails. Alternatively, for another example, the NRF obtains, based on an identifier of the NFc in the token #1 retrieval request, NF configuration information (namely, NF configuration information of the NFc) that is locally stored in the NRF network element and that corresponds to the NF identifier, and compares the parameter, for example, the NF type of the NFc, in the token #1 retrieval request with an NF type in the NF configuration information. If the NF types are consistent, the identity verification succeeds. If the NF types are inconsistent, the identity verification fails.

Optionally, the NRF may perform security protection on the generated token #1. The security protection herein may include integrity protection. For example, the NRF generates a message authentication code (message authentication code, MAC) for the token #1 by using a shared key, and the NRF may send the MAC and the token #1 to the NFc together. The MAC may be for verifying whether information in the token #1 is tampered with. Alternatively, the NRF signs content of the token #1 by using a private key, and the NFp may verify, by using the signature, whether the content of the token #1 is tampered with. For a specific method of protecting the access token by using the signature and the MAC, refer to the definition in the request for comments (request for comments, RFC) 7515.

For example, if all of parameters in an access token request message #1 are verified, and the NFc is authorized to access the requested service, the NRF sends the generated token #1 to the NFc by using an access token response message (for example, Nnrf_AccessToken_Get Response). Optionally, the access token response message may further include another parameter, for example, expiration (expiration, EXP) time of the token #1 or a parameter range that is allowed to be requested by using the token #1. In addition, if the authorization verification of the NFc fails, the NRF sends an error response or a reject response to the NFc.

It should be noted that, a check granularity of the NRF in step S202 is a service level. Therefore, when the verification succeeds, the NFc may initiate, based on the token #1, a service request to any NFp that can provide the service. Because the check of the token is at the service level, obtaining the token does not mean that the MTLF is allowed to obtain the data related to the model, but only indicates that the MTLF can obtain a data service from the ADRF.

It can be learned that, based on the procedure shown in FIG. 3 and/or the procedure shown in FIG. 4, the ADRF may determine that the identifier of the MTLF that requests the data of the model is included in the authorization message (or the resource storage request). Therefore, the MTLF allowed by the AnLT may obtain the data related to the model. As shown in Table 1, the identifier set may include the device identifier, the vendor identifier, or the interoperability indicator of the MTLF.

It may be understood that, in the procedure shown in FIG. 3 or FIG. 4, the data related to the model may be generated by the model, and/or the data related to the model may be for training to generate the model.

When the data related to the model is generated by the model, the AnLF may request the model from the MTLF by using the subscription message shown in S101 or the model subscription message shown in S203, to obtain the model provided by the MTLF. Further, based on the model, the AnLF may obtain the data related to the model. For example, the data related to the model includes model output data or model ground truth data. In addition, the AnLF may further send, to the ADRF, the data related to the model, and the ADRF stores the data. In addition, the AnLF may further indicate, to the ADRF by using the authorization message shown in S102 or the resource storage request shown in S205, that the MTLF is allowed to obtain the data related to the model. Therefore, the MTLF may obtain, from the ADRF, the data related to the model, and determine, based on the data related to the model, whether to update the model.

When the data related to the model is for training to generate the model, the AnLF may generate the data related to the model and/or collect, from another network element, the data related to the model, and send, to the ADRF, the data related to the model. In this case, the data related to the model may include model input data, the model ground truth data, or the like. Further, the AnLF may indicate, to the ADRF by using the authorization message shown in S102 or the resource storage request shown in S205, that the MTLF is allowed to obtain the data related to the model. Therefore, the MTLF may obtain, from the ADRF, the data related to the model, and perform training based on the data related to the model, to obtain the model. In addition, the AnLF may request the model from the MTLF by using the subscription message shown in S101 or the model subscription message shown in S203, to obtain the model.

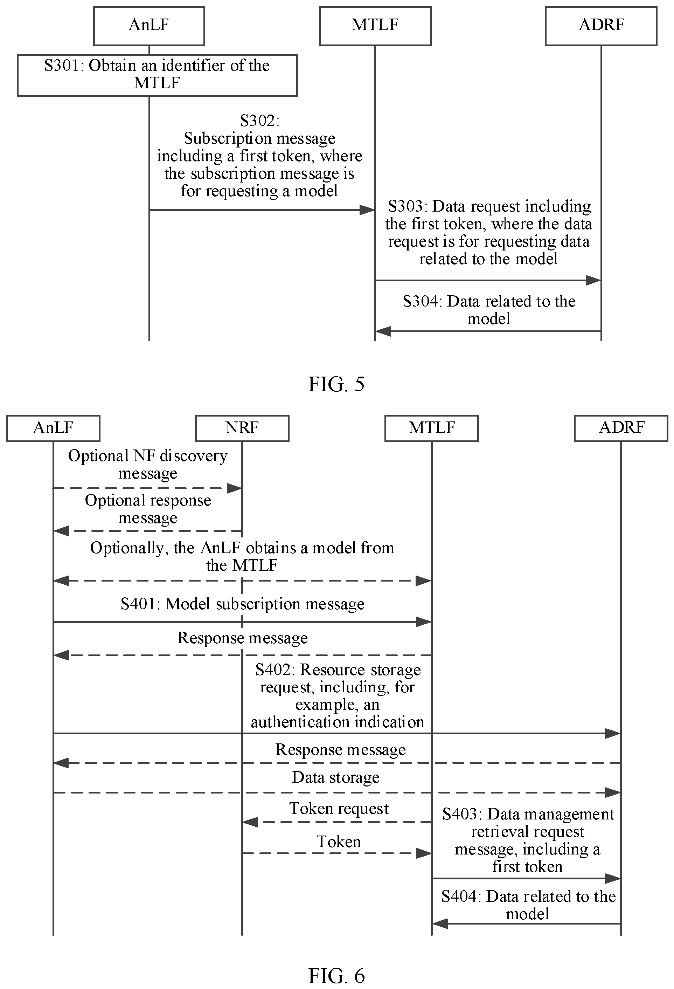

Different from the embodiment shown in FIG. 3 and FIG. 4, in another embodiment, an AnLF may send a first token to an MTLF that provides a model, so that the MTLF requests, from an ADRF based on the first token, data related to the model, and the ADRF sends, to the MTLF having the first token, the data related to the model. Because the AnLF does not send the first token to an MTLF that does not provide the model, the ADRF does not send, to the MTLF that does not provide the model, the data related to the model. Therefore, security of obtaining the data related to the model can be improved. As shown in FIG. 5, an implementation of this embodiment may include the following steps.

S301: The AnLF obtains an identifier of the MTLF.

For an implementation of S301, refer to descriptions of a manner in which the AnLF obtains the identifier of the MTLF in S101, S201, or S202. Repeated descriptions are not provided. For example, in S301, the AnLF may obtain identifiers of one or more MTLFs from an NRF, and determine one MTLF.

The identifier of the MTLF in S301 may be associated with an analysis identifier.

It may be understood that, the identifier of the MTLF may include one or more of a device identifier, a vendor identifier, and an interoperability indicator of the MTLF.

S302: The AnLF sends, to the MTLF, a subscription message including the first token, where the subscription message is for requesting the model.

In S302, for the subscription information, refer to descriptions of the subscription message in S101. A difference lies in that the subscription message in S302 additionally includes the first token, to provide authorization for the MTLF to obtain the data of the model, in other words, indicate that the MTLF is allowed to obtain the data related to the model.

The first token may include an identifier of the AnLF, the identifier of the MTLF, and an index of the data. The identifier of the AnLF may be an AnLF NF ID. The identifier of the MTLF may include the device identifier, the vendor identifier, or the interoperability indicator of the MTLF. The index of the data may be for obtaining the data related to the model, for example, may be a combination of the identifier of the AnLF and an index of a dataset, or an index of a dataset that includes the identifier of the AnLF.

Security protection may be performed on the first token by the AnLF and/or the NRF, so that the first token cannot be tampered with. The security protection, for example, integrity protection, may be implemented with reference to a solution in which the NRF performs security protection on the token in a conventional technology.

Optionally, the first token may further include validity period information, for example, expiration time. The AnLF may update the first token of the MTLF after the EXP expires. In addition, after EXP of an issued first token expires, the MTLF may request, by using a machine learning model provision subscription notification (MLModelProvision_SubscribeNotify) message, a dataset index authorization request message, or the like, the AnLF to update the first token.

Optionally, the first token may further include the analysis identifier, and the model is for performing an analysis service corresponding to the analysis identifier. The analysis identifier may indicate the MTLF together with the vendor identifier and/or the interoperability indicator, to be specific, may be for determining an MTLF that has the vendor identifier and/or the interoperability indicator and that supports the analysis service corresponding to the analysis identifier.

In an example, the first token may be referred to as a data token. The first token may be represented as a token (NFp ID, NFc ID, datasetTag, EXP). The NFp ID indicates the identifier of the MTLF. The NFc ID indicates the identifier of the AnLF. The datasetTag indicates the index of the dataset. The datasetTag may also be replaced with the NFp ID+the datasetTag. It indicates a combination of the identifier of the AnLF and the index of the dataset. Alternatively, the index of the data formed by the combination of the identifier of the AnLF and the index of the dataset may be determined based on the NFp ID and the datasetTag in the first token. The EXP indicates the expiration time.

In this embodiment, for a manner of generating the first token, refer to a manner in which the NRF generates an authentication token. A difference lies in that the first token is issued by the AnLF, and the authentication token is issued by the NRF. Only the MTLF that is allowed by the AnLF to obtain the data related to the model, that is, the MTLF that provides the model for the AnLF, can obtain the first token issued by the AnLF.

It may be understood that, in the embodiment shown in FIG. 5, the AnLF may issue the first token to the MTLF based on a requirement of the AnLF, and send the first token to the MTLF by using the subscription message. A process of issuing the token and sending the subscription message may be performed without the request of the MTLF.

The subscription message may further indicate the MTLF to include, when requesting, from the ADRF, the data having the index, the first token in a data request. For example, the MTLF may be pre-configured in a manner like control signaling or predefinition, so that when receiving the subscription message that carries the first token, the MTLF learns that the first token needs to be carried in the data request.

FIG. 6 is used as an example. In S401, the AnLF may send a model subscription message to the MTLF, and include the first token in the message. The model subscription message is an example of the subscription message in S302. Correspondingly, the AnLF may receive a response message from the MTLF. For example, the response message may be for confirming a subscription or carrying the model.

In an example of S302, the first token may alternatively be sent independently of the subscription message. For example, in addition to sending the subscription message, the AnLF additionally sends the first token to the MTLF by using a model subscription message or a model subscription update message. For example, the AnLF may request the model from the MTLF by using the subscription message, then provide an association relationship between the model and the index of the data for the MTLF by using the model subscription message or the model subscription update message, and provide the first token.

S303: The MTLF sends, to the ADRF, the data request including the first token, where the data request is for requesting the data related to the model.

The data request may further carry an index of the data and the identifier of the MTLF.

Optionally, the data request may further include the identifier of the AnLF, to indicate a producer of the requested data. The index of the data may be the combination of the identifier of the AnLF and the index of the dataset. Alternatively, the index of the data is the index of the dataset.

For example, as shown in FIG. 6, the MTLF may send a data management retrieval request message to the ADRF, where the message may carry the first token and the index of the data (or a storage transaction identifier), and optionally, may further include the identifier of the MTLF and/or the identifier of the AnLT.

S304: The ADRF sends, to the MTLF, the data related to the model.

The ADRF may send the data based on the first token, for example, send the data when determining, based on the first token, that the MTLF is allowed to obtain the data. A case of determining, based on the first token, that the MTLF is allowed to obtain the data may include a case in which the ADRF verifies that the index of the data in the data request matches the index of the data in the first token. In addition, the data request may further include the identifier of the AnLF, and the case of determining, based on the first token, that the MTLF is allowed to obtain the data may further include a case in which the ADRF verifies that the identifier of the AnLF in the data request matches the identifier of the AnLF in the first token.

Optionally, before S304, the AnLF may further send an authorization message to the ADRF, where the authorization message includes at least one of the identifier of the AnLF, the index of the data, and an authentication indication, and the authentication indication indicates that authorization is required to obtain the data identified by the index. Correspondingly, the ADRF may verify the first token of the MTLF before sending the data having the index. The index of the data and/or the identifier of the AnLF may be used by the ADRF to verify whether the first token provides permission for the MTLF to obtain the requested data. For example, when the first token includes the index of the data and the identifier of the AnLF, the ADRF may send the data to the MTLF.

FIG. 6 is still used as an example. In S402, the AnLF may send a resource storage request to the ADRF, and include the identifier of the AnLF, the index of the data, and the authentication indication in the message. The resource storage request may be used as an example of the authorization message. Correspondingly, the ADRF may store, by using the index of the data or the storage transaction identifier, the data related to the model, and store an association relationship between the identifier of the AnLF, the index of the data, and the authentication indication, that is, learn that the MTLF needs to be authorized to obtain the data from the AnLF. In addition, the ADRF may send the storage transaction identifier to the AnLF by using a response message. S402 and sending of the response message may alternatively be performed before S401.

Correspondingly, before S304, the ADRF may determine, based on the index of the data and/or the identifier of the AnLF in the data request, whether the corresponding authentication indication exists. If the corresponding authentication indication exists, to be specific, authorization information that is sent by the AnLF and that carries the index of the data and the authentication indication is received, the ADRF verifies the first token of the MTLF.

Optionally, the authorization message may further include the analysis identifier, and the analysis identifier is associated with the vendor identifier and/or the interoperability indicator. The ADRF may determine, based on the authorization message, that the MTLF that has the vendor identifier and/or the interoperability indicator and that supports the analysis service corresponding to the analysis identifier obtains the data. Correspondingly, the first token may also include the analysis identifier.

For example, the ADRF may verify whether the index of the data included in the first token is consistent with the index of the data included in the authorization message, that is, the MTLF is not allowed to obtain data other than the data authorized by the AnLF, and/or verify whether the index of the data included in the first token is consistent with the index of the data included in the data request. In addition, the ADRF may further verify whether the identifier of the AnLF included in the first token is consistent with the identifier of the producer AnLF in the authorization message, and/or verify whether the identifier of the MTLF included in the first token is consistent with the identifier of the MTLF that sends the data request. In addition, the ADRF may further verify whether the EXP in the first token expires.

For example, in the procedure shown in FIG. 6, after determining, based on the first token, that the MTLF has the permission to obtain the data corresponding to the index, the ADRF may perform S404, to be specific, send the data to the MTLF. It may be understood that, for steps that are not separately described in FIG. 6, refer to descriptions of response steps in the procedure in FIG. 4. Repeated descriptions are not provided.

Optionally, when the MTLF requests the data from the ADRF, if the data request does not include the first token, and a corresponding authentication indication exists based on the data, the ADRF may determine, according to a local configuration policy, whether to provide the corresponding data for the MTLF, or determine to reject the request. For example, if the MTLF does not have the permission, optionally, the ADRF may request, by using signaling, the AnLF to verify whether the MTLF can have the permission to obtain the data from the AnLF, for example, send, to the AnLF, the identifier of the MTLF and the index of the data requested by the MTLF. Alternatively, when the first token is not provided, the ADRF may directly reject the request of the MTLF.

It can be learned that, based on the procedure shown in FIG. 5 and/or the procedure shown in FIG. 6, the AnLF may send the first token to the MTLF that provides the model, to indicate that the MTLF is allowed to obtain the data related to the model. In this way, that the ADRF provides, for an MTLF that does not have the first token, the data related to the model can be avoided.

It may be understood that, in the procedure shown in FIG. 5 or FIG. 6, the data related to the model may be generated by the model, and/or the data related to the model may be for training to generate the model.

When the data related to the model is generated by the model, the AnLF may request the model from the MTLF by using the subscription message shown in S302 or the model subscription message shown in S401, to obtain the model provided by the MTLF. Further, based on the model, the AnLF may obtain the data related to the model. For example, the data related to the model includes model output data or model ground truth data. In addition, the AnLF may further send, to the ADRF, the data related to the model, and the ADRF stores the data. In addition, the MTLF may further request and obtain, from the ADRF by using the data request including the first token shown in S303 or the data management retrieval request message including the first token shown in S403, the data related to the model. Therefore, after obtaining, from the ADRF, the data related to the model, the MTLF may determine, based on the data related to the model, whether to update the model.

When the data related to the model is for training to generate the model, the AnLF may generate the data related to the model and/or collect, from another network element, the data related to the model, and send, to the ADRF, the data related to the model. In this case, the data related to the model may include model input data, the model ground truth data, or the like. Further, the AnLF may request and obtain, from the ADRF by using the data request including the first token shown in S303 or the data management retrieval request message including the first token shown in S403, the data related to the model. Therefore, after obtaining, from the ADRF, the data related to the model, the MTLF may perform training based on the data related to the model, to obtain the model. In addition, the AnLF may request the model from the MTLF by using the subscription message shown in S302 or the model subscription message shown in S401, to obtain the model.

In another embodiment, an NRF may provide a second token for an MTLF that is allowed to obtain data by an AnLF, so that the MTLF requests, from an ADRF, the data from the AnLF based on the second token, and the ADRF sends the data to the MTLF having the second token. Optionally, the AnLF does not send, to the NRF, identifiers of other MTLFs that do not provide a model. Therefore, the NRF does not send the second token to the MTLFs, and the ADRF does not send, to the MTLFs, data related to the model. Therefore, security of obtaining the data related to the model can be improved. As shown in FIG. 5, an implementation of this embodiment may include the following steps.

S501: The MTLF sends a token request to the NRF, where the token request includes an identifier of the AnLF.

Correspondingly, the NRF receives the token request.

Optionally, before S501, the AnLF may send a subscription message to the NRF, where the subscription message is for requesting the model. Therefore, the MTLF may obtain the identifier of the AnLF.

In addition, identifiers of one or more AnLFs for which the MTLF may provide a service may also be pre-configured in the MTLF.

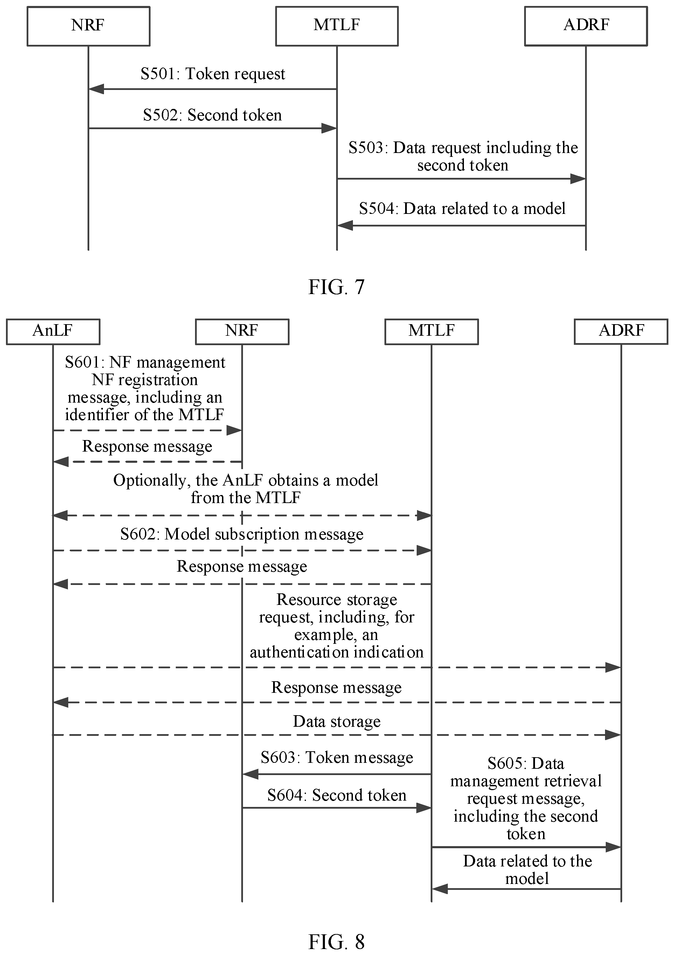

As shown in FIG. 8, the token request may be included in a token message (Nnrf_token) shown in S603. In other words, the token message may include the token request.

S502: When the MTLF is allowed to obtain the data provided by the AnLF, the NRF sends the second token to the MTLF, where the second token is for providing authorization for the MTLF to obtain the data.

Optionally, the NRF may also actively send the second token to the MTLF when the MTLF is allowed to obtain the data provided by the AnLF. In other words, S501 may be optional.

Correspondingly, the MTLF receives the second token.

Before S502, the AnLF may send an identifier of the MTLF to the NRF, to indicate that the MTLF is allowed to obtain the data provided by the AnLF. Optionally, the AnLF may further send an index of the data to the NRF, to indicate that the MTLF is allowed to obtain the data having the index. For example, the identifier of the MTLF is included in an identifier set sent by the AnLF to the NRF. The identifier set may also be referred to as a list, a list of allowed network function consumers for the data, a list of allowed consumers for the data, a list of allowed data consumers for the data, or the like. Refer to descriptions of the list shown in Table 1.

Correspondingly, the NRF receives and/or stores the identifier of the MTLF.

The MTLF in S502 may be the MTLF that is allowed by the AnLF to obtain the data provided by the AnLF. Specifically, the data may be data that is related to the model and that is provided by the MTLF.

For example, the identifier of the MTLF may include at least one of a device identifier, a vendor identifier, and an interoperability indicator of the MTLF.

In an example in which the AnLF sends the identifier of the MTLF to the NRF, as shown in FIG. 8, the AnLF may send an NF management NF registration (Nnrf_NFManagement_NFRegister) message shown in S601 to the NRF, where the message includes the identifier of the MTLF, for example, carries the identifier set. Optionally, if the identifier of the MTLF includes the vendor identifier and/or the interoperability indicator, the message may further carry an analysis identifier, to determine an MTLF that has the vendor identifier and/or the interoperability indicator and that supports an analysis service corresponding to the analysis identifier. Correspondingly, the NRF may send a response message, to indicate that the message has been received.

It may be understood that, in S502, a case in which the MTLF is allowed to obtain the data provided by the AnLF may mean that the AnLF indicates the identifier of the MTLF to the NRF. It indicates that the MTLF is allowed to obtain the data from the AnLF. For example, the identifier of the MTLF that sends the token request is included in the NF management NF registration message shown in S601, or is included in the identifier set in the NF management NF registration message.

If the MTLF is verified by the NRF, in S604, the NRF may send the second token to the MTLF.

Optionally, the AnLF may further send the subscription message to the MTLF, where the subscription message is for requesting the model. As described above, the MTLF may obtain the identifier of the AnLF based on the message. Alternatively, in a solution in which the MTLF obtains the identifier of the AnLF based on the pre-configuration, the MTLF may receive the subscription message before or after sending the token request. An execution time sequence of the subscription message and the token request is not specifically limited in this application.

For the subscription message, refer to the subscription message in S101. For example, the subscription message may include the index of the data. Optionally, the subscription message may further include the identifier of the AnLF.

It may be understood that, after obtaining, based on the procedure shown in FIG. 5, the data related to the model, the MTLF may perform training based on the data to obtain the model, and provide the model for the AnLF in response to the subscription message; and/or after providing the model for the AnLF in response to a subscription request, the MTLF may obtain, based on the procedure shown in FIG. 5, the data related to the model, and determine, based on the data, whether to update the model.

In an example of FIG. 6, in S602, the AnLF may send a model subscription message to the MTLF, and the model subscription message may be used as an example of the subscription message. Correspondingly, the MTLF may send a response message to the AnLF, to indicate receiving of a subscription or carrying of the model.

In a possible embodiment, the second token in S502 includes the identifier of the AnLF and the identifier of the MTLF. The identifier of the AnLF may be an AnLF NF ID. The identifier of the MTLF may include the device identifier, the vendor identifier, or the interoperability indicator of the MTLF.

Optionally, the second token may further include the index of the data, an identifier of the ADRF, and/or the analysis identifier. The index of the data may be for obtaining the data related to the model, to indicate specific pieces of data that the MTLF is allowed to obtain. The identifier of the ADRF may be for determining the ADRF, to indicate a specific ADRF from which the MTLF obtains permission to obtain the data. The analysis identifier may be used together with the vendor identifier and/or the interoperability indicator, and may be for determining an MTLF that has the vendor identifier and/or the interoperability indicator and that supports the analysis service corresponding to the analysis identifier.

Different from the foregoing authentication token, the second token herein is issued only to the MTLF indicated by the AnLF to the NRF. The MTLF may be configured to provide the model for the AnLF. Therefore, that an MTLF that does not obtain the authorization from the AnLF obtains the second token and obtains the data from the AnLF by using the second token can be avoided. Optionally, the second token may further include the index of the data. For example, the index is for obtaining the data related to the model provided by the MTLF for the AnLF. In this way, that the MTLF that does not obtain the authorization from the AnLF obtains the data related to the model can be further avoided.

It may be understood that, in comparison with a verification process in which the NRF issues the authentication token in a conventional technology, in a process in which the NRF verifies the second token of the MTLF, whether the MTLF is allowed to obtain the data provided by the AnLF needs to be additionally verified. In addition, compared with the authentication token, the second token additionally includes the identifier of the AnLF, and optionally may include the analysis identifier. In addition, for a manner of verifying and generating the second token, refer to the authentication token for implementation.

S503: The MTLF sends, to the ADRF, a data request including the second token.

The data request may be for requesting the data provided by the AnLF, for example, the data related to the model.

In addition, the data request may further include the index of the data, to determine the data provided by the AnLF.

Optionally, the data request may further include the identifier of the AnLF, to indicate a producer of the requested data.

In this embodiment, optionally, based on the subscription message, the MTLF may determine, before requesting the data from the ADRF, whether the second token has been obtained. If the second token is not obtained, the MTLF may send the token request to the NRF. Optionally, if the token request sent by the MTLF to the NRF is rejected, it indicates that the MTLF is not authorized by the AnLF to obtain the data related to the model, and the NRF may stop requesting the data from the ADRF.

The data request may include a data management retrieval request message shown in S605 in FIG. 8.

S504: The ADRF sends, to the MTLF based on the second token, the data related to the model.

The ADRF may send the data related to the model when the MTLF is allowed to obtain the data provided by the AnLF. The case in which the MTLF is allowed to obtain the data provided by the AnLF includes, for example, that an identifier of the MTLF in the data request is consistent with the identifier of the MTLF in the second token. In addition, the data request may further include the identifier of the AnLF, and the case in which the MTLF is allowed to obtain the data provided by the AnLF may further include that the identifier of the AnLF in the data request is consistent with the identifier of the AnLF in the second token. In addition, the data request may further include the index of the data, and the case in which the MTLF is allowed to obtain the data provided by the AnLF may further include that the index of the data in the data request is consistent with the index of the data in the second token. In addition, the data request may further include the identifier of the ADRF, and the case in which the MTLF is allowed to obtain the data provided by the AnLF may further include that the ADRF determines that the identifier of the ADRF is consistent with the identifier of the ADRF in the second token.

Optionally, the ADRF may further receive an authorization message from the AnLF before S504. The authorization message may include an authentication indication, indicating that the MTLF obtaining the data needs to be authorized. Based on the authentication indication, the ADRF may verify data obtaining permission of the MTLF after receiving an authorization request from the MTLF.

In addition, the authorization message may further include at least one of the identifier of the MTLF, the index of the data, and the authentication indication. For the authorization message, refer to descriptions in S304.

For the authorization message, refer to a resource storage request shown in FIG. 8.

In S504, the ADRF may verify whether the second token includes the identifier of the AnLF, that is, verify whether the AnLF is a data producer of the data that is requested by the MTLF. In addition, the ADRF may further verify whether the identifier of the MTLF included in the second token is consistent with the identifier of the MTLF that requests the data, that is, verify whether the MTLF that requests the data is allowed by the AnLF to obtain the data. Optionally, when the second token further includes the index of the data, the ADRF may further verify whether the index of the data included in the second token is consistent with the index of the requested data, that is, verify whether the index of the data in the data request is consistent with the index of the data in the second token. Optionally, when the second token further includes the identifier of the ADRF, the ADRF may further verify whether the identifier of the ADRF included in the second token is consistent with the identifier of the ADRF. Optionally, if the identifier of the MTLF is the vendor identifier and/or the interoperability indicator, the MTLF that has the vendor identifier and/or the interoperability indicator and that supports the analysis service corresponding to the analysis identifier may be determined with reference to the analysis identifier in the second token, that is, the second token may further include the analysis identifier.

It may be understood that, for steps that are not separately described in FIG. 8, refer to descriptions of response steps in the procedure in FIG. 4 and/or the procedure in FIG. 6. Repeated descriptions are not provided.

It may be understood that, in the procedure shown in FIG. 7 or FIG. 8, the data related to the model may be generated by the model, and/or the data related to the model may be for training to generate the model.

When the data related to the model is generated by the model, the AnLF may request the model from the MTLF by using the subscription message in the embodiment in FIG. 7 or the model subscription message shown in S602, to obtain the model provided by the MTLF. Further, based on the model, the AnLF may obtain the data related to the model. For example, the data related to the model includes model output data or model ground truth data. In addition, the AnLF may further send, to the ADRF, the data related to the model, and the ADRF stores the data. In addition, the MTLF may further request and obtain the second token from the NRF by using the token request including the identifier of the AnLF shown in S501 or the token message including the identifier of the AnLF shown in S603. Therefore, the MTLF is authorized to obtain, from the ADRF, the data related to the model. The AnLF may send the identifier of the MTLF to the NRF, to authorize the MTLF to obtain the data stored by the AnLF in the ADRF. The MTLF may further request and obtain, from the ADRF by using the data request including the second token shown in S503 or the data management retrieval request message including the second token shown in S605, the data related to the model. Therefore, after obtaining, from the ADRF, the data related to the model, the MTLF may determine, based on the data related to the model, whether to update the model.

When the data related to the model is for training to generate the model, the AnLF may generate the data related to the model and/or collect, from another network element, the data related to the model, and send, to the ADRF, the data related to the model. In this case, the data related to the model may include model input data, the model ground truth data, or the like. The MTLF may request and obtain the second token from the NRF by using the token request including the identifier of the AnLF shown in S501 or the token message including the identifier of the AnLF shown in S603. Therefore, the MTLF is authorized to obtain, from the ADRF, the data related to the model. The AnLF may send the identifier of the MTLF to the NRF, to authorize the MTLF to obtain the data stored by the AnLF in the ADRF. Further, the MTLF may request and obtain, from the ADRF by using the data request including the second token shown in S503 or the data management retrieval request message including the second token shown in S605, the data related to the model. Therefore, after obtaining, from the ADRF, the data related to the model, the MTLF may perform training based on the data related to the model, to obtain the model. In addition, the AnLF may request the model from the MTLF by using the subscription message shown in S302 or the model subscription message shown in S401, to obtain the model.

It can be learned that, based on any embodiment shown in FIG. 3 to FIG. 8 of this application, the MTLF needs to be authorized to obtain the data related to the model, so that the security can be improved, and that an unauthorized MTLF or another network element obtains the data related to the model and further obtains the model based on the data can be avoided. In addition, the MTLF can have the permission to obtain the data from the ADRF to train or update the model, to provide a model obtained through training for the AnLF, or provide an updated model.

It may be understood that, in embodiments of this application, when the AnLF expects a specific MTLF to continue monitoring the model, the AnLF may authorize the MTLF to obtain the data related to the model, so that the MTLF monitors accuracy of the model based on the related data, and/or provides a retrained model. Therefore, the AnLF may determine the one or more MTLFs that are associated with the analysis identifier, send the subscription message to the MTLF, and send the authorization message to the ADRF. A time sequence of sending the subscription message and the authorization message in any embodiment in FIG. 3 to FIG. 8 is not limited in this application, nor is a time sequence of obtaining the model and sending the subscription message and/or the authorization message limited. Because the subscription message and the authorization message may be sent for the index of the data, the AnLF may first send the subscription message and/or the authorization message for the index of the data, and then associate the index of the data with the model. For example, an association between the model and the index of the data is indicated to the MTLF in a model obtaining process. The AnLF may alternatively first associate the index of the data with the model, and then send the subscription message and/or the authorization message.

In an optional solution of this application, the AnLF may also provide, for an MTLF other than the MTLF that provides the model, authorization of the data related to the model, so that the MTLF other than the MTLF that provides the model detects the accuracy of the model after obtaining the data, or is configured to update the model.

It may be understood that, in embodiments of this application, when there are a plurality of identifiers of MTLFs that are associated with the analysis identifier, the AnLF may select one MTLF from the plurality of MTLFs based on a decision of the AnLF, and send the subscription message to the MTLF to request the model. In addition, the AnLF may authorize the MTLF to obtain the data related to the model. Therefore, even if there is another MTLF that supports the analysis identifier, when the model is not provided for the AnLF, the MTLF cannot obtain the authorization from the AnLF, and consequently cannot obtain the data related to the model. It may be understood that, if the AnLF needs a plurality of models, the AnLF may request a plurality of models from the one or more MTLFs. Correspondingly, the authorization may be provided for the one or more MTLFs, so that the one or more MTLFs obtain data related to the plurality of models. For a specific manner, refer to descriptions in this application. Repeated descriptions are not provided.

In the flowcharts of this application, dashed lines represent optional actions.

It may be understood that, to implement functions in the foregoing embodiments, the AnLF, the MTLF, the NRF, and/or the ADRF may separately include corresponding hardware structures and/or software modules for performing the foregoing functions. A person skilled in the art should be easily aware that, in this application, units and method steps in examples described with reference to embodiments disclosed in this application can be implemented by hardware or a combination of hardware and computer software. Whether a function is performed by hardware or hardware driven by computer software depends on particular application scenarios and design constraints of the technical solutions.

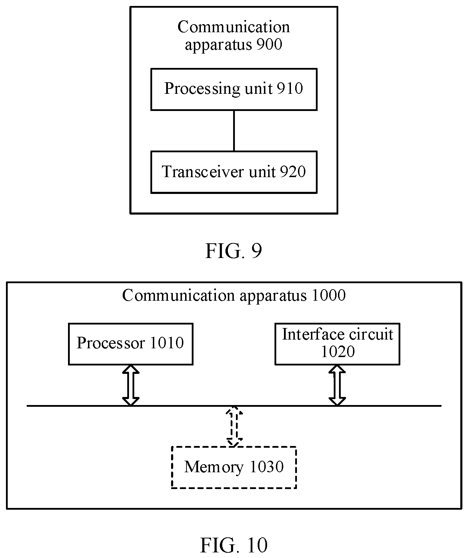

FIG. 9 and FIG. 10 are diagrams of structures of possible communication apparatuses according to embodiments of this application. The communication apparatuses may be configured to implement functions of the analytics function network element, the model training function network element, the network repository function network element, or the data repository network element in the foregoing method embodiments, and therefore can also achieve beneficial effects of the foregoing method embodiments. The analytics function network element is, for example, an AnLF, the model training function network element is, for example, an MTLF, the network repository function network element is, for example, an NRF, and the data repository network element is, for example, an ADRF.

As shown in FIG. 9, a communication apparatus 900 includes a processing unit 910 and a transceiver unit 920. The communication apparatus 900 is configured to implement functions of the analytics function network element, the model training function network element, the network repository function network element, or the data repository network element in any one of the method embodiments shown in FIG. 3 to FIG. 8.

When the communication apparatus 900 is configured to implement functions of the analytics function network element in the method embodiments shown in FIG. 3, the transceiver unit 920 is configured to send a subscription message and an authorization message.

When the communication apparatus 900 is configured to implement functions of the data repository network element in the method embodiments shown in FIG. 3, the transceiver unit 920 may be configured to: receive the authorization message and a data request, and send, to the model training function network element, data related to a model. The processing unit 910 may be configured to determine whether the model training function network element is allowed to obtain the data related to the model.

When the communication apparatus 900 is configured to implement functions of the analytics function network element in the method embodiments shown in FIG. 5, the transceiver unit 920 is configured to: obtain an identifier of the model training function network element, and send a subscription message including a first token. The processing unit 910 may be configured to generate the first token.

When the communication apparatus 900 is configured to implement functions of the data repository network element in the method embodiments shown in FIG. 5, the transceiver unit 920 may be configured to: receive a data request including the first token, and send, to the model training function network element, data related to a model.

When the communication apparatus 900 is configured to implement functions of the model training function network element in the method embodiments shown in FIG. 5, the transceiver unit 920 is configured to: receive a subscription message including the first token, send the data request including the first token, and receive the data related to the model.

When the communication apparatus 900 is configured to implement functions of the network repository function network element in the method embodiments shown in FIG. 7, the transceiver unit 920 is configured to: receive a token request, and send a second token. The processing unit 910 may be configured to obtain the second token.

When the communication apparatus 900 is configured to implement functions of the model training function network element in the method embodiments shown in FIG. 7, the transceiver unit 920 is configured to: send the token request, receive the second token, send a data request including the second token, and receive data related to a model.

For more detailed descriptions of the processing unit 910 and the transceiver unit 920, refer to related descriptions in the method embodiments shown in FIG. 3 to FIG. 8. For example, for technical terms in the foregoing actions of the processing unit 910 and the transceiver unit 920, refer to the descriptions in the foregoing method embodiments. Details are not described again.

As shown in FIG. 10, a communication apparatus 1000 includes a processor 1010 and an interface circuit 1020. The processor 1010 and the interface circuit 1020 are coupled to each other. It may be understood that, the interface circuit 1020 may be a transceiver or an input/output interface. Optionally, the communication apparatus 1000 may further include a memory 1030, configured to: store instructions executed by the processor 1010, store input data required by the processor 1010 to run the instructions, or store data generated after the processor 1010 runs the instructions.

When the communication apparatus 1000 is configured to implement any one of methods shown in FIG. 3 to FIG. 8, the processor 1010 is configured to implement functions of the foregoing processing unit 910, and the interface circuit 1020 is configured to implement functions of the foregoing transceiver unit 920.

When the communication apparatus is a chip used in an analytics function network element, a model training function network element, a network repository function network element, or a data repository network element, the chip implements functions of the analytics function network element, the model training function network element, the network repository function network element, or the data repository network element in the foregoing method embodiments. The chip may receive, by using another module (for example, a radio frequency module, an antenna, or a communication interface) in the analytics function network element, the model training function network element, the network repository function network element, or the data repository network element, information sent by another network element or device to the analytics function network element, the model training function network element, the network repository function network element, or the data repository network element. Alternatively, the chip sends information to another module (for example, a radio frequency module, an antenna, or an interface) in the analytics function network element, the model training function network element, the network repository function network element, or the data repository network element. The information is sent by the analytics function network element, the model training function network element, the network repository function network element, or the data repository network element to the another network element or device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium, and write information into the storage medium. The storage medium may alternatively be a component of the processor. The processor and the storage medium may be located in an ASIC. In addition, the ASIC may be located in the analytics function network element, the model training function network element, the network repository function network element, or the data repository network element. Alternatively, the processor and the storage medium may exist in the analytics function network element, the model training function network element, the network repository function network element, or the data repository network element as discrete components.

An embodiment of this application further provides a communication system, including one or more network elements or apparatuses of the analytics function network element, the model training function network element, the network repository function network element, or the data repository network element configured to implement the foregoing method embodiments.

An embodiment of this application further provides a computer-readable storage medium. The computer-readable storage medium is configured to store a computer program or instructions. When the computer program or the instructions are run, the method shown in the foregoing method embodiments is caused to be implemented.

An embodiment of this application further provides a computer program product. When the computer program product runs on a computer, the method shown in the foregoing method embodiments is caused to be implemented.

All or a part of the foregoing embodiments may be implemented by using software, hardware, firmware, or any combination thereof. When software is used for implementing the embodiments, all or a part of the embodiments may be implemented in a form of a computer program product. The computer program product includes one or more computer programs or instructions. When the computer program or the instructions are loaded and executed on a computer, all or a part of procedures or functions according to embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In descriptions of this application, terms such as "first" and "second" are merely used for a purpose of distinguishing descriptions, and shall not be understood as an indication or implication of relative importance or an indication or implication of an order. It should be noted that, an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" indicates "or". For example, a/b indicates a or b.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, various numbers in embodiments of this application are merely for differentiation for ease of description, and are not for limiting the scope of embodiments of this application. Sequence numbers of the foregoing processes do not mean an execution sequence, and the execution sequence of the processes should be determined based on functions and internal logic of the processes.

## Claims

1. A communication method, comprising:
sending, by an analytics function network element, a subscription message to a model training function network element, wherein the subscription message is for requesting a model; and
sending, by the analytics function network element, an authorization message to a data repository network element, wherein the authorization message indicates that the model training function network element is allowed to obtain data related to the model, and the authorization message comprises an identifier of the model training function network element and an index of the data.

2. The method according to claim 1, wherein that the authorization message comprises the identifier of the model training function network element comprises:
a list of allowed network function consumers for the data in the authorization message comprises the identifier of the model training function network element.

3. The method according to claim 1 or 2, wherein the index of the data is for obtaining the data related to the model.

4. The method according to any one of claims 1 to 3, wherein the method further comprises:
sending, by the analytics function network element, the data to the data repository network element, and receiving the model from the model training function network element, wherein the model is determined based on the data; or
receiving, by the analytics function network element, the model from the model training function network element, determining the data based on the model, and sending the data to the data repository network element.

5. The method according to claim 4, wherein the data is for determining whether to update the model.

6. The method according to any one of claims 1 to 5, wherein the method further comprises:
sending, by the analytics function network element, an analysis identifier to a network repository function network element, wherein the model is for performing an analysis service corresponding to the analysis identifier; and
receiving, by the analytics function network element, the identifier of the model training function network element from the network repository function network element, wherein the identifier of the model training function network element is determined based on the analysis identifier.

7. The method according to any one of claims 1 to 6, wherein the subscription message comprises the index of the data.

8. The method according to claim 1, wherein the identifier of the model training function network element comprises one or more of the following:
a device identifier of the model training function network element, a vendor identifier of the model training function network element, and an interoperability indicator of the model training function network element.

9. The method according to any one of claims 1 to 8, wherein the authorization message further comprises at least one of an identifier of the analytics function network element and an authentication indication, and the authentication indication indicates that authorization is required to obtain the data.

10. A communication method, comprising:
receiving, by a data repository network element, an authorization message, wherein the authorization message indicates that a model training function network element is allowed to obtain data related to a model, and the authorization message comprises an identifier of the model training function network element and an index of the data;
receiving, by the data repository network element, a data request from the model training function network element, wherein the data request is for requesting the data; and
sending, by the data repository network element, the data to the model training function network element when the model training function network element is allowed to obtain the data related to the model.

11. The method according to claim 10, wherein that the authorization message comprises the identifier of the model training function network element comprises:
a list of allowed network function consumers for the data in the authorization message comprises the identifier of the model training function network element; and sending, by the data repository network element, the data to the model training function network element when the model training function network element is allowed to obtain the data related to the model comprises:
sending, by the data repository network element, the data to the model training function network element when the list of allowed network function consumers for the data comprises the identifier of the model training function network element.

12. The method according to claim 11, wherein the method further comprises:
storing, by the data repository network element, the list of allowed network function consumers for the data.

13. The method according to any one of claims 10 to 12, wherein the identifier of the model training function network element comprises one or more of the following:
a device identifier of the model training function network element, a vendor identifier of the model training function network element, and an interoperability indicator of the model training function network element.

14. The method according to any one of claims 10 to 13, wherein the authorization message is from an analytics function network element, and the method further comprises:
receiving, by the data repository network element, the data from the analytics function network element.

15. The method according to any one of claims 10 to 14, wherein the data request comprises an identifier of the analytics function network element and/or the index of the data.

16. The method according to any one of claims 10 to 15, wherein the authorization message further comprises at least one of the identifier of the analytics function network element and an authentication indication, and the authentication indication indicates that authorization is required to obtain the data.

17. A communication method, comprising:
obtaining, by an analytics function network element, an identifier of a model training function network element; and
sending, by the analytics function network element, a subscription message to the model training function network element, wherein the subscription message is for requesting a model, the subscription message comprises a first token, the first token is for providing authorization for the model training function network element to obtain data related to the model, and the first token comprises an identifier of the analytics function network element, the identifier of the model training function network element, and an index of the data.

18. The method according to claim 17, wherein the index of the data related to the model is for obtaining the data related to the model.

19. The method according to claim 17 or 18, wherein the method further comprises:
sending, by the analytics function network element, the data to a data repository network element, and receiving the model from the model training function network element, wherein the model is determined based on the data; or
receiving, by the analytics function network element, the model from the model training function network element, determining the data based on the model, and sending the data to the data repository network element.

20. The method according to claim 19, wherein the data is for determining whether to update or train the model.

21. The method according to any one of claims 17 to 20, wherein the first token further comprises validity period information of the first token.

22. The method according to any one of claims 17 to 21, wherein the method further comprises:
sending, by the analytics function network element, an authorization message to the data repository network element, wherein the authorization message comprises at least one of the identifier of the analytics function network element, the index of the data, and an authentication indication, and the authentication indication indicates that the authorization is required to obtain the data.

23. The method according to any one of claims 17 to 22, wherein the method further comprises:
receiving, by the analytics function network element, a token update request from the model training function network element, wherein the token update request is for updating the first token.

24. The method according to any one of claims 17 to 23, wherein the method further comprises:
receiving, by the data repository network element, a data request from the model training function network element, wherein the data request is for requesting the data, and the data request comprises the first token; and
sending, by the data repository network element, the data to the model training function network element based on the first token.

25. The method according to claim 24, wherein the data request comprises an index of the data; and
sending, by the data repository network element, the data to the model training function network element based on the first token comprises:
sending, by the data repository network element, the data to the model training function network element when it is verified that the index of the data in the data request matches the index of the data in the first token.

26. The method according to claim 24 or 25, wherein the method further comprises:
receiving, by the data repository network element, the authorization message, wherein the authorization message indicates that the authorization is required to obtain the data.

27. The method according to claim 26, wherein the authorization message comprises one or more of the identifier of the analytics function network element, the index of the data, and the authentication indication, and the authentication indication indicates that the authorization is required to obtain the data.

28. The method according to claim 26 or 27, wherein the authorization message is from the analytics function network element, and the method further comprises:
receiving, by the data repository network element, the data from the analytics function network element.

29. A communication method, comprising:
receiving, by a model training function network element, a subscription message from an analytics function network element, wherein the subscription message is for requesting a model, the subscription message comprises a first token, the first token is for providing authorization for the model training function network element to obtain data related to the model, and the first token comprises an identifier of the analytics function network element, an identifier of the model training function network element, and an index of the data;
sending, by the model training function network element, a data request to a data repository network element, wherein the data request is for requesting the data, and the data request comprises the first token; and
receiving, by the model training function network element, the data from the data repository network element.

30. The method according to claim 29, wherein the index of the data related to the model is for obtaining the data related to the model.

31. The method according to claim 29 or 30, wherein the method further comprises:
determining, by the model training function network element, the model based on the data, and sending the model to the analytics function network element; or
sending, by the model training function network element, the model to the analytics function network element, wherein the model is for determining the data.

32. The method according to claim 31, wherein determining, by the model training function network element, the model based on the data, and sending the model to the analytics function network element comprises: determining, by the model training function network element based on the data, to update the model, and sending the updated model to the analytics function network element.

33. The method according to any one of claims 29 to 32, wherein the first token further comprises validity period information of the first token.

34. The method according to any one of claims 29 to 33, wherein the data request comprises the identifier of the analytics function network element and/or the index of the data.

35. The method according to any one of claims 29 to 34, further comprising:
sending, by the model training function network element, a token update request to the analytics function network element, wherein the token update request is for updating the first token.

36. A communication method, comprising:
receiving, by a network repository function network element, a token request from a model training function network element, wherein the token request comprises an identifier of an analytics function network element; and
sending, by the network repository function network element, a second token to the model training function network element when the model training function network element is allowed to obtain data provided by the analytics function network element, wherein the second token is for providing authorization for the model training function network element to obtain the data, and the second token comprises the identifier of the analytics function network element and an identifier of the model training function network element.

37. The method according to claim 36, wherein the method further comprises:
receiving, by the network repository function network element, a list of allowed network function consumers for the data from the analytics function network element, wherein the list comprises the identifier of the model training function network element; and
a case in which the model training function network element is allowed to obtain the data provided by the analytics function network element is that the list comprises the identifier of the model training function network element.

38. The method according to claim 36 or 37, wherein the second token further comprises an analysis identifier and/or an identifier of a data repository network element, and a model is for performing an analysis service corresponding to the analysis identifier.

39. The method according to any one of claims 36 to 38, wherein the method further comprises:
receiving, by the network repository function network element, the analysis identifier from the analytics function network element, wherein the model is for performing the analysis service corresponding to the analysis identifier;
determining, by the network repository function network element based on the analysis identifier, the model training function network element that supports the analysis service corresponding to the analysis identifier; and
sending, by the network repository function network element, the identifier of the model training function network element to the analytics function network element.

40. The method according to any one of claims 36 to 39, wherein the method further comprises:
sending, by the analytics function network element, the list of allowed network function consumers for the data to the network repository function network element, wherein the list comprises the identifier of the model training function network element.

41. The method according to any one of claims 36 to 40, wherein the method further comprises:
sending, by the analytics function network element, the data to the data repository network element, and receiving the model from the model training function network element, wherein the model is determined based on the data; or
receiving, by the analytics function network element, the model from the model training function network element, determining the data based on the model, and sending the data to the data repository network element.

42. The method according to claim 41, wherein the data is for determining whether to update or train the model.

43. The method according to any one of claims 40 to 42, wherein the method further comprises:
sending, by the analytics function network element, the analysis identifier to the network repository function network element, wherein the model is for performing the analysis service corresponding to the analysis identifier; and
receiving, by the analytics function network element, the identifier of the model training function network element from the network repository function network element, wherein the identifier of the model training function network element is determined based on the analysis identifier.

44. The method according to any one of claims 36 to 43, wherein the identifier of the model training function network element comprises one or more of the following:
a device identifier of the model training function network element, a vendor identifier of the model training function network element, and an interoperability indicator of the model training function network element.

45. A communication method, comprising:
sending, by a model training function network element, a token request to a network repository function network element, wherein the token request comprises an identifier of an analytics function network element;
receiving, by the model training function network element, a second token from the network repository function network element, wherein the second token comprises the identifier of the analytics function network element and an identifier of the model training function network element;
sending, by the model training function network element, a data request to a data repository network element, wherein the data request is for requesting data that is related to a model and that is provided by the analytics function network element, and the data request comprises the second token; and
receiving, by the model training function network element, the data from the data repository network element.

46. The method according to claim 45, wherein the method further comprises:
determining, by the model training function network element, the model based on the data, and sending the model to the analytics function network element; or
sending, by the model training function network element, the model to the analytics function network element, wherein the model is for determining the data.

47. The method according to claim 46, wherein determining, by the model training function network element, the model based on the data, and sending the model to the analytics function network element comprises: determining, by the model training function network element based on the data, to update the model, and sending the updated model to the analytics function network element.

48. The method according to any one of claims 45 to 47, wherein the second token further comprises an analysis identifier and/or an identifier of a data repository network element, and the model is for performing an analysis service corresponding to the analysis identifier.

49. A communication apparatus, comprising a processor, wherein the processor is configured to execute a computer program or instructions, to implement the method according to any one of claims 1 to 48.

50. The apparatus according to claim 49, further comprising a memory and/or a transceiver, wherein the memory is configured to store the computer program or the instructions, and the transceiver is used by the apparatus for communication.

51. A computer program product, comprising a computer program or instructions, wherein when the computer program or the instructions are executed by a computer, the computer is caused to implement the method according to any one of claims 1 to 48.

52. A communication apparatus, comprising a unit or a module configured to perform the method according to any one of claims 1 to 48.

53. A computer-readable storage medium, wherein the storage medium stores a computer program or instructions; and when the computer program or the instructions are executed by a communication apparatus, the method according to any one of claims 1 to 48 is implemented.

54. A communication system, comprising:
an analytics function network element, configured to implement the method according to any one of claims 1 to 9; and
a data repository network element, configured to implement the method according to any one of claims 10 to 16.

55. A communication system, comprising:
an analytics function network element, configured to implement the method according to any one of claims 17 to 23;
a data repository network element, configured to perform the method according to any one of claims 24 to 28; and
a model training function network element, configured to implement the method according to any one of claims 29 to 35.

56. A communication system, comprising:
a network repository function network element, configured to implement the method according to any one of claims 36 to 39 and 44;
an analytics function network element, configured to implement the method according to any one of claims 40 to 44; and
a model training function network element, configured to implement the method according to any one of claims 45 to 48.
